(19) Europäisches Patentamt
European Patent Office
Office européen des brevets

(11) EP 3 287 503 A1

(12) **EUROPEAN PATENT APPLICATION**
published in accordance with Art. 153(4) EPC

(43) Date of publication:
**28.02.2018 Bulletin 2018/09**

(21) Application number: **16783285.6**

(22) Date of filing: **22.04.2016**

(51) Int Cl.:
***C09K 5/04*** *(2006.01)* ***C10M 105/36*** *(2006.01)*
***C10M 105/38*** *(2006.01)* ***C10M 105/42*** *(2006.01)*
***C10M 105/48*** *(2006.01)* ***C10M 107/24*** *(2006.01)*
***C10M 107/34*** *(2006.01)* ***F25B 1/00*** *(2006.01)*
***F25B 1/053*** *(2006.01)* ***C10N 20/02*** *(2006.01)*
***C10N 30/06*** *(2006.01)* ***C10N 40/30*** *(2006.01)*

(86) International application number:
**PCT/JP2016/062803**

(87) International publication number:
**WO 2016/171264 (27.10.2016 Gazette 2016/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.04.2015 JP 2015089777**

(71) Applicant: **Asahi Glass Company, Limited**
**Tokyo 100-8405 (JP)**

(72) Inventors:
- **TASAKA Mai**
  **Tokyo 100-8405 (JP)**
- **FUKUSHIMA Masato**
  **Tokyo 100-8405 (JP)**
- **MITSUOKA Hiroaki**
  **Tokyo 100-8405 (JP)**

(74) Representative: **Müller-Boré & Partner Patentanwälte PartG mbB**
**Friedenheimer Brücke 21**
**80639 München (DE)**

# (54) COMPOSITION FOR USE IN HEAT CYCLE SYSTEM, AND HEAT CYCLE SYSTEM

(57) A composition for a heat cycle system contains a working medium for heat cycle containing 1-chloro-2,3,3,3-tetrafluoropropene and a refrigerant oil.

FIG. 1

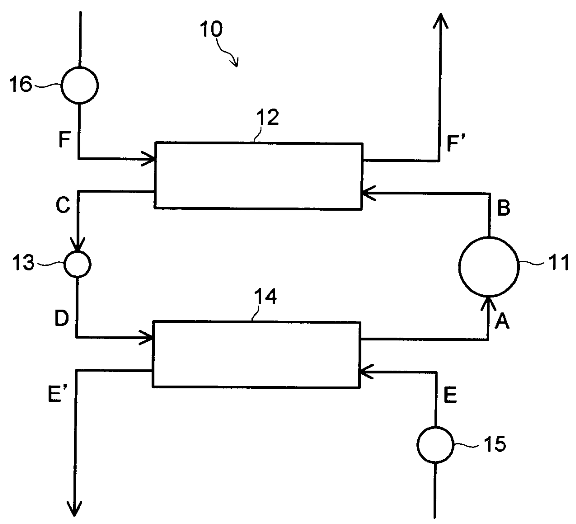


EP 3 287 503 A1

## Description

FIELD

The present invention relates to a composition for a heat cycle system, and a heat cycle system using the composition.

BACKGROUND

In this description, abbreviated names of halogenated hydrocarbon compounds are described in brackets after the compound names, and in this description, the abbreviated names are employed in place of the compound names as necessary.

Conventionally, as a working medium for a heat cycle system such as a refrigerant for a refrigerator, a refrigerant for an air-conditioning apparatus, a working medium for a power generation system (such as an exhaust heat recovery power generation), a working medium for a latent heat transport apparatus (such as a heat pipe), or a secondary cooling medium, chlorofluorocarbon (CFC) such as chlorotrifluoromethane or dichlorodifluoromethane, and hydrochlorofluorocarbon (HCFC) such as chlorodifluoromethane have been used. However, effects of CFC and HCFC on the ozone layer in the stratosphere have been pointed out, and they are subjected to regulation at present.

Under such circumstances, as a working medium for a heat cycle system, hydrofluorocarbons (HFC) having less effect on the ozone layer, such as difluoromethane (HFC-32), tetrafluoroethane, and pentafluoroethane (HFC-125), have been used in place of CFC and HCFC. For example, R410A (a pseudoazeotropic mixture of HFC-32 and HFC-125 at a mass ratio of 1:1) or the like is a refrigerant that has been widely used conventionally. However, it has been pointed out that HFCs may cause global warming.

For example, 1,1,1,2-tetrafluoroethane (HFC-134a) used as a refrigerant for an automobile air conditioner has a global warming potential so high as 1430 (100 years). Further, in an automobile air conditioner, the refrigerant is highly likely to leak out to the air from a connection hose, a bearing, or the like.

As a refrigerant to be used in place of HFC-134a, carbon dioxide and 1,1-difluoroethane (HFC-152a) having a global warming potential of 124 (100 years) that is lower as compared with HFC-134a, have been under consideration.

However, with carbon dioxide, the equipment pressure tends to be extremely high as compared with HFC-134a. Therefore, there are many problems that should be solved in applying carbon dioxide to all automobiles. Further, HFC-152a has a combustion range, and has a problem for securing the safety

Further, HFC-134a has been used as a working medium of a centrifugal refrigerator (to be also called a turbo refrigerator). The centrifugal refrigerator is to be used for cooling and heating of buildings and in plants of producing industrial cold-water, and the like. As the working medium of the centrifugal refrigerator, flon such as CFC-11 has been used. However, in relation to the recent ozone layer destruction problem, production and use of flon have been regulated internationally. Therefore, flon is being converted to a hydrogen-containing flon working medium not containing chlorine such as, for example, tetrafluoroethane (HFC-134a) or pentafluoropropane (HFC-245fa).

Here, HFC-134a has a global warming potential of 1430 (100 years), which is large. Further, HFC-245fa has a global warming potential of 1030 (100 years), but is highly toxic. In the centrifugal refrigerator, an amount of the working medium to be filled is larger as compared with another refrigerator and a heat pump. In a centrifugal refrigerator having a 500-refrigeration ton class capacity, for example, about 700 kg or more and 800 kg or less of a working medium is filled. The centrifugal refrigerator is often installed in a machine room of a building, and even if leakage of the working medium occurs due to an accident, or the like, there is a possibility that the working medium in large amounts is to be released into the air. As above, the working medium to be used for the centrifugal refrigerator is strongly required to have not only a small global warming potential environmentally, but also high safety, namely low toxicity or low flammability particular.

In recent years, expectations are concentrated on compounds having a carbon-carbon double bond such as hydrofluoroolefin (HFO), hydrochlorofluoroolefin (HCFO), and chlorofluoroolefin (CFO), which are a working medium having less effect on the ozone layer and less effect on global warming because the carbon-carbon double bond is likely to be decomposed by OH radicals in the air. In this description, saturated HFC is called HFC and discriminated from HFO unless otherwise stated. Further, HFC may be clearly described as saturated hydrofluorocarbon in some cases.

Among HFO, HCFO, and CFO each having the carbon-carbon double bond described above, HCFO and CFO are compounds having suppressed flammability because they are high in proportion of halogen in one molecule. Therefore, as a working medium having less effect on the ozone layer and less effect on global warming and further having suppressed flammability, using HCFO and CFO has been considered. As such a working medium, for example, 1-chloro-2,3,3,3-tetrafluoropropene (to be referred to as "HCFO-1224yd" hereinafter) (for example, see Patent Document 1), which is hydrochlorofluoropropene, has been known.

RELEVANT REFERENCES

PATENT REFERENCE

[Patent Reference 1] WO 2012/157763 A1

SUMMARY

PROBLEMS TO BE SOLVED BY THE INVENTION

However, HCFO-1224yd is a compound having an unsaturated bond in its molecule and is a compound having an extremely short life in the air. Therefore, under a condition that compression and heating are repeatedly performed in a heat cycle, HCFO-1224yd is inferior in stability to saturated hydro fluorocarbon or hydrochlorofluorocarbon such as conventional HFC or HCFC, and sometimes decreases in lubricating properties in a heat cycle system.

Thus, a heat cycle system using HCFO-1224yd as a working medium has been required to be able to maintain lubricating properties and operate efficiently, while sufficiently taking advantage of excellent cycle performance of HCFO-1224yd.

The present invention has been made from the above-described viewpoints, and its object is to provide a composition for a heat cycle system enabling more stable lubrication of a working medium for heat cycle containing HCFO-1224yd while sufficiently taking advantage of a low global warming potential and excellent cycle performance of 1-chloro-2,3,3,3-tetrafluoropropene (HCFO-1224yd), and a heat cycle system that has both a low global warming potential and high cycle performance and further has improved lubricating properties of the working medium for heat cycle.

MEANS OF SOLVING THE PROBLEMS

The present invention provides a composition for a heat cycle system and a heat cycle system having the following configurations described in [1] to [14] below.

[1] A composition for a heat cycle system containing a working medium for heat cycle containing 1-chloro-2,3,3,3-tetrafluoropropene and a refrigerant oil.
[2] The composition for a heat cycle system according to [1], in which the 1-chloro-2,3,3,3-tetrafluoropropene contains (Z)-1-chloro-2,3,3,3-tetrafluoropropene and (E)-1-chloro-2,3,3,3-tetrafluoropropene at a ratio of 51: 49 to 100: 0 by mass ratio represented by (Z)-1-chloro-2,3,3,3-tetrafluoropropene: (E)-1-chloro-2,3,3,3-tetrafluoropropene.
[3] The composition for a heat cycle system according to [1] or [2], in which
the refrigerant oil contains at least one type of oil selected from the group consisting of an ester-based refrigerant oil, an ether-based refrigerant oil, a hydrocarbon-based refrigerant oil, and a naphthenic refrigerant oil.
[4] The composition for a heat cycle system according to [3], in which
the refrigerant oil contains at least one type of compound selected from the group consisting of a dibasic acid ester, a polyol ester, a complex ester, a polyol carbonic acid ester, polyvinyl ether, a polyalkylene glycol, alkyl benzene, and a naphthene-base oil.
[5] The composition for a heat cycle system according to any one of [1] to [4], in which
a kinematic viscosity of the refrigerant oil at 40°C is 1 $mm^2/s$ or more and 750 $mm^2/s$ or less.
[6] The composition for a heat cycle system according to any one of [1] to [5], in which
the refrigerant oil contains carbon atoms and oxygen atoms at a ratio of 2.0 or more and 7.5 or less by molar ratio represented by carbon atoms/oxygen atoms.
[7] The composition for a heat cycle system according to any one of [1] to [6], in which
the working medium for heat cycle further contains saturated hydrofluorocarbon.
[8] The composition for a heat cycle system according to any one of [1] to [7], in which
the working medium for heat cycle further contains hydrofluoroolefin.
[9] The composition for a heat cycle system according to any one of [1] to [8], in which
the working medium for heat cycle further contains hydrochlorofluoroolefin other than the 1-chloro-2,3,3,3-tetrafluoropropene.
[10] The composition for a heat cycle system according to any one of [1] to [9], in which
the working medium for heat cycle contains 10 mass% or more and 100 mass% or less of the 1-chloro-2,3,3,3-tetrafluoropropene.
[11] The composition for a heat cycle system according to [10], in which
the working medium for heat cycle contains 20 mass% or more and 95 mass% or less of the 1-chloro-2,3,3,3-tetrafluoropropene.

[12] A heat cycle system using the composition for a heat cycle system according to any one of [1] to [11].
[13] The heat cycle system according to [12], in which
the heat cycle system is a refrigerating apparatus, an air-conditioning apparatus, a power generation system, a heat transport apparatus, or a secondary cooling machine.
[14] The heat cycle system according to [12], in which
the heat cycle system is a centrifugal refrigerator.
[15] The heat cycle system according to [12], in which
the heat cycle system is a low-pressure centrifugal refrigerator.

EFFECTS OF THE INVENTION

According to the present invention, it is possible to provide a composition for a heat cycle system enabling more stable lubrication of a working medium for heat cycle containing HCFO-1224yd while sufficiently taking advantage of a low global warming potential and excellent cycle performance of HCFO-1224yd.
Furthermore, according to the present invention, it is possible to provide a heat cycle system that has both less effect on global warming and high cycle performance and further has improved lubricating properties of a working medium for heat cycle.

BRIEF DESCRIPTION OF THE DRAWINGS

FIG. 1 is a schematic configuration diagram illustrating a refrigeration cycle system being one example of a heat cycle system of the present invention.
FIG. 2 is a cycle chart illustrating change of state of a working medium for heat cycle in the refrigeration cycle system in FIG. 1 on a pressure-enthalpy line diagram.

DETAILED DESCRIPTION

Hereinafter, there will be explained an embodiment of the present invention.

[Composition for a heat cycle system]

A composition for a heat cycle system contains a working medium for heat cycle containing HCFO-1224yd and a refrigerant oil.
As a heat cycle system to which the composition for a heat cycle system of the present invention is applied, a heat cycle system having a heat exchanger such as a condenser or an evaporator is used without any particular limitation. The heat cycle system, for example, a refrigeration cycle system, has a mechanism in which a gaseous working medium is compressed by a compressor and cooled by a condenser to form a high-pressure liquid, the pressure of the liquid is lowered by an expansion valve, and the liquid is vaporized at low temperature by an evaporator so that heat is removed by the heat of vaporization.
When HCFO-1224yd is used as the working medium for heat cycle for such a heat cycle system, depending on the temperature conditions and the pressure conditions, HCFO-1224yd is sometimes destabilized to be decomposed, thus impairing the function of the working medium for heat cycle. In the composition for a heat cycle system of the present invention, HCFO-1224yd is made to coexist with the refrigerant oil, thereby making it possible to increase lubricating properties of HCFO-1224yd as the working medium for heat cycle and exhibit efficient cycle performance.
Hereinafter, there will be explained components contained in the composition for a heat cycle system of the present invention.

<Working medium for heat cycle>

The composition for a heat cycle system of the present invention contains HCFO-1224yd as the working medium for heat cycle. The working medium for heat cycle may contain a later-described optional component as necessary in addition to HCFO-1224yd. The working medium for heat cycle contains preferably 10 mass% or more of HCFO-1224yd, more preferably 10 mass% or more and 100 mass% or less of HCFO-1224yd, further preferably 20 mass% or more and 100 mass% or less of HCFO-1224yd, still more preferably 40 mass% or more and 100 mass% or less of HCFO-1224yd, and most preferably 60 mass% or more and 100 mass% or less of HCFO-1224yd. The working medium for heat cycle preferably contains 20 mass% or more and 95 mass% or less of HCFO-1224yd in the case of a mixture.

(HCFO-1224yd)

HCFO-1224yd has, as described above, halogen that suppresses flammability and a carbon-carbon double bond that is likely to be decomposed by OH radicals in the air in its molecule. Therefore, HCFO-1224yd is a working medium for heat cycle that has suppressed flammability and has less effect on the ozone layer and less effect on global warming.
As for HCFO-1224yd, two geometric isomers:

(E)-1-chloro-2,3,3,3-tetrafluoropropene (HCFO-1224yd(E)) being an E-isomer; and
(Z)-1-chloro-2,3,3,3-tetrafluoropropene (HCFO-1224yd(Z)) being a Z-isomer exist. In the present invention, HCFO-1224yd without description of (E), (Z) indicates HCFO-1224yd(E), HCFO-1224yd(Z), or a mixture of HCFO-1224yd(E) and HCFO-1224yd(Z) mixed at an arbitrary ratio. Further, compounds each having a carbon-carbon double bond in its molecule and containing an E-isomer and a Z-isomer are also described similarly.

HCFO-1224yd(Z) has higher chemical stability than HCFO-1224yd(E) and is preferred as the working medium for heat cycle. Therefore, the ratio of HCFO-1224yd(Z) and HCFO-1224yd(E) in HCFO-1224yd is preferred to be 51: 49 to 100: 0 and more preferred to be 80: 20 to 90: 10 by mass ratio represented by HCFO-1224yd(Z): HCFO-1224yd(E). When HCFO-1224yd contains HCFO-1224yd(Z) and HCFO-1224yd(E) at a ratio of 51: 49 to 100: 0 by mass ratio represented by HCFO-1224yd(Z): HCFO-1224yd(E), a longer-period stable composition for a heat cycle system can be obtained because HCFO-1224yd contains more HCFO-1224yd(Z). Furthermore, it is possible to suppress an increase in production cost caused by separating HCFO-1224yd(Z) and HCFO-1224yd(E) by distillation, or the like. In the meantime, from the viewpoint of stability of the working medium for heat cycle, the mass ratio represented by HCFO-1224yd(Z): HCFO-1224yd(E) is preferred to be 95: 5 to 100: 0.
Coefficient of performance, refrigerating capacity, and a global warming potential (GWP) in HCFO-1224yd, HFC-245fa, and HFC-134a are illustrated in Table 1. The cycle performance is expressed by the coefficient of performance and the refrigerating capacity obtained by later-described methods. The coefficient of performance and the refrigerating capacity are described as relative values (to be hereinafter referred to as "relative coefficient of performance" and "relative refrigerating capacity" respectively) using those of HFC-245fa as references (1.000). The GWP is the value over 100 years described in the Intergovernmental Panel on Climate Change (IPCC) Fourth Assessment Report (2007), or measured according to a method described in this report. In this description, the GWP means this value unless otherwise stated.

[Table 1]

| | HFC-245fa | HFC-134a | HCFO-1224yd |
|---|---|---|---|
| Relative coefficient of performance | 1.000 | 0.939 | 0.997 |
| Relative refrigerating capacity | 1.000 | 4.124 | 1.473 |
| GWP | 1030 | 1430 | 10 or less |

[Optional component]

The working medium for heat cycle may optionally contain a compound ordinarily used as a working medium, other than HCFO-1224yd, within a range not impairing the effects of the present invention. As such an optional compound (optional component), for example, there can be cited HFC, HFO, HCFO other than HCFO-1224yd, and components to be vaporized and liquefied together with HCFO-1224yd, other than HFC, HFO, and HCFO, and so on. The optional component is preferred to be HFC, HFO, and HCFO other than HCFO-1224yd.
The optional component is preferred to be a compound capable of keeping the GWP and a temperature glide within acceptable ranges while having an effect to further improve the above-described relative coefficient of performance and relative refrigerating capacity, when used for the heat cycle system in combination with HCFO-1224yd. When the working medium for heat cycle contains such a compound, more favorable cycle performance can be obtained while keeping a low GWP, and an effect by the temperature glide is also small.

(Temperature glide)

When the working medium for heat cycle contains an optional component, the working medium for heat cycle has a considerable temperature glide except for the case where HCFO-1224yd and the optional component form an azeotropic composition. The temperature glide of the working medium for heat cycle varies depending on the type of

the optional component and a mixing ratio of HCFO-1224yd and the optional component.

When the mixture is used as the working medium for heat cycle, an azeotropic mixture or a pseudoazeotropic mixture such as R410A is preferably used ordinarily. A non-azeotropic composition has a problem of undergoing a composition change when put into a refrigerating and air-conditioning apparatus from a pressure container. Further, when a refrigerant leaks out from a refrigerating and air-conditioning apparatus, a refrigerant composition in the refrigerating and air-conditioning apparatus is highly likely to change, resulting in difficulty in recovery of the refrigerant composition to an initial state. In the meantime, the above-described problems can be avoided as long as the working medium for heat cycle is an azeotropic or pseudoazeotropic mixture.

As an index to measure applicability of the mixture to the working medium for heat cycle, the "temperature glide" is commonly employed. The temperature glide is defined as properties that the initiation temperature and the completion temperature of a heat exchanger, for example, of evaporation in an evaporator or of condensation in a condenser differ from each other. The temperature glide of the azeotropic mixture is 0, and as for the pseudoazeotropic mixture, like the temperature glide of R410A being 0.2, for example, the temperature glide of the azeotropic mixture and the pseudoazeotropic mixture is extremely close to 0.

The case where the temperature glide of the working medium for heat cycle is large is a problem because, for example, an inlet temperature of an evaporator decreases, to make frosting more likely to occur. Further, in the heat cycle system, in order to improve heat exchange efficiency, it is common to make the working medium for heat cycle flowing in a heat exchanger and a heat source fluid such as water or the air flow in counter-current flow. Then, the temperature difference of the heat source fluid is small in a stable operation state. Therefore, it is difficult to obtain a heat cycle system with good energy efficiency when the working medium for heat cycle is a non-azeotropic composition with a large temperature glide. Accordingly, when the mixture is used as the working medium for heat cycle, a working medium for heat cycle with an appropriate temperature glide is desired.

(HFC)

HFC is a component to improve the cycle performance (capability) of the heat cycle system.

HFC is known to be higher in GWP than HCFO-1224yd. Therefore, HFC to be combined with HCFO-1224yd is preferably selected appropriately particularly from the viewpoint of keeping the GWP within an acceptable range, in addition to improving the cycle performance as the working medium for heat cycle and keeping the temperature glide within an appropriate range.

As HFC having less effect on the ozone layer and having less effect on global warming, concretely, HFC with 1 or more and 5 or less carbon atoms is preferred. HFC may be linear, branched, or cyclic.

Examples of HFC include difluoromethane, difluoroethane, trifluoroethane, tetrafluoroethane, pentafluoroethane, pentafluoropropane, hexafluoropropane, heptafluoropropane, pentafluorobutane, heptafluorocyclopentane, and so on.

Among them, 1,1,2,2-tetrafluoroethane (HFC-134), 1,1,1,2-tetrafluoroethane (HFC-134a), 1,1,1,3,3-pentafluoropropane (HFC-245fa), and 1,1,1,3,3-pentafluorobutane (HFC-365mfc) are preferred, and HFC-134a, HFC-245fa, and HFC-365mfc are more preferred in terms of having less effect on the ozone layer and having less effect on global warming.

One type of HFC may be used independently, or two or more types may be used in combination.

The content of HFC in the working medium for heat cycle (100 mass %) is as follows, for example. In the case of HFC being HFC-134a, the refrigerating capacity improves without causing a large decrease in coefficient of performance as long as the content of HFC-134a falls within a range of 1 mass% or more and 90 mass% or less. In the case of HFC being HFC-245fa, the refrigerating capacity improves without causing a large decrease in coefficient of performance as long as the content of HFC-245fa falls within a range of 1 mass% or more and 60 mass% or less. The content of HFC can be controlled according to required properties of the working medium for heat cycle.

(HFO)

HFO is a component to improve the cycle performance (capability) of the heat cycle system.

The GWP of HFO is an order of magnitude lower than HFC. Accordingly, HFO to be combined with HCFO-1224yd is preferably selected appropriately with a view of improving the cycle performance as the above-described working medium for heat cycle and keeping the temperature glide within an appropriate range particularly, rather than considering the GWP.

Examples of HFO include difluoroethylene, trifluoroethylene, trifluoropropylene, tetrafluoropropylene, pentafluoropropylene, hexafluorobutene, and so on.

Among them, in terms of having less effect on the ozone layer and having less effect on global warming, 1,1-difluoroethylene (HFO-1132a), 1,2-difluoroethylene (HFO-1132), 1,1,2-trifluoroethylene (HFO-1123), 2,3,3,3-tetrafluoropropene (HFO-1234yf), 2-fluoropropene (HFO-1261yf), 1,1,2-trifluoropropene (HFO-1243yc), (E)-1,2,3,3,3,-pentafluoropropene (HFO-1225ye(E)), (Z)-1,2,3,3,3-pentafluoropropene (HFO-1225ye(Z)), (E)-1,3,3,3-tetrafluoropropene (HFO-1234ze(E)), (Z)-1,3,3,3,-tetrafluoropropene (HFO-1234ze(Z)), 3,3,3-trifluoropropene (HFO-1243zf), (E)-1,1,1,4,4,4-hexafluoro-2-butene (HFO-1336mzz(E)), and (Z)-1,1,1,4,4,4-hexafluoro-2-butene (HFO-1336mzz(Z)) are preferred, HFO-1234yf, HFO-1234ze(E), HFO-1234ze(Z), HFO-1336mzz(E), and HFO-1336mzz(Z) are more preferred, and HFO-1234yf, HFO-1234ze (E), HFO-1234ze(Z), and HFO-1336mzz(Z) are most preferred.

One type of HFO may be used independently, or two or more types may be used in combination.

The content of HFO in the working medium for heat cycle (100 mass%) is preferably 1 mass% or more and 90 mas% or less, and more preferably 1 mass% or more and 40 mass% or less. The working medium for heat cycle including the content of HFO being 1 mass% or more and 40 mass% or less provides a heat cycle system excellent in cycle performance (efficiency and capability) as compared with a working medium for heat cycle made of only HCFO-1224yd.

(HCFO other than HCFO-1224yd)

HCFO as an optional component other than HCFO-1224yd is also preferably selected from the viewpoints similar to those of HFO described above. Incidentally, the GWP of HCFO other than HCFO-1224yd is an order of magnitude lower than HFC. Accordingly, HCFO other than HCFO-1224yd to be combined with HCFO-1224yd is preferably selected appropriately with a view of improving the cycle performance as the above-described working medium for heat cycle and keeping the temperature glide within an appropriate range particularly, rather than considering the GWP.

Examples of HCFO other than HCFO-1224yd include 1-chloro-2,2-difluoroethylene (HCFO-1122), 1,2-dichlorofluoroethylene (HCFO-1121), 1-chloro-2-fluoroethylene (HCFO-1131), 2-chloro-3,3,3-trifluoropropene (HCFO-1233xf), and 1-chloro-3,3,3-trifluoropropene (HCFO-1233zd).

Among them, as HCFO other than HCFO-1224yd, HCFO-1233zd is preferred in terms of having a high critical temperature and being excellent in durability and coefficient of performance. One type of HCFO other than HCFO-1224yd may be used independently, or two or more types may be used in combination.

The content of HCFO other than HCFO-1224yd in the working medium for heat cycle (100 mass%) is preferably 1 mass% or more and 90 mass% or less, and more preferably 1 mass% or more and 40 mass% or less. The working medium for heat cycle including the content of HCFO other than HCFO-1224yd being 1 mass% or more and 40 mass% or less provides a heat cycle system excellent in cycle performance (efficiency and capability) as compared with a working medium for heat cycle made of only HCFO-1224yd.

(Other optional component)

The working medium for heat cycle to be used for the composition for a heat cycle system may contain, other than the above-described optional component, other optional components such as carbon dioxide, a hydrocarbon, and chlorofluoroolefin (CFO). As other optional components, components having less effect on the ozone layer and having less effect on global warming are preferred.

Examples of the hydrocarbon include propane, propylene, cyclopropane, butane, isobutane, pentane, isopentane, and so on. One type of hydrocarbons may be used independently, or two or more types may be used in combination.

When the above-described working medium for heat cycle contains a hydrocarbon, the content of hydrocarbon is less than 10 mass %, preferably 1 mass% or more and 5 mass% or less, and more preferably 3 mass% or more and 5 mass% or less with respect to 100 mass% of the working medium for heat cycle. As long as the content of hydrocarbon is equal to or more than the lower limit value, solubility of a mineral refrigerant oil to the working medium for heat cycle becomes better.

Examples of CFO includes chlorofluoropropene, chlorofluoroethylene, and so on. In terms of easily suppressing the flammability of the working medium for heat cycle without greatly decreasing the cycle performance of the working medium for heat cycle, 1,1-dichloro -2,3,3,3-tetrafluoropropene (CFO-1214ya), 1,3-dichloro-1,2,3,3-tetrafluoropropene (CFO-1214yb), 1,2-dichloro-1,2-difluoroethylene (CFO-1112) are preferred as CFO. One type of CFO may be used independently, or two or more types may be used in combination.

When the working medium for heat cycle contains CFO, the content of CFO is less than 10 mass%, preferably 1 mass% or more and 8 mass% or less, and more preferably 2 mass% or more and 5 mass% or less with respect to 100 mass% of the working medium for heat cycle. As long as the content of CFO is equal to or more than the lower limit value, the flammability of the working medium for heat cycle is easily suppressed. As long as the content of CFO is equal to or less than the upper limit value, excellent cycle performance is easily obtained.

When the working medium for heat cycle to be used for the composition for a heat cycle system contains the above-described other optional components, the total content of the other optional components in the working medium for heat cycle is preferably less than 10 mass%, more preferably 8 mass% or less, and further preferably 5 mass% or less with respect to 100 mass% of the working medium for heat cycle.

<Refrigerant oil>

In the composition for a heat cycle system, a refrigerant oil capable of improving lubricating properties of the working medium for heat cycle containing HCFO-1224yd is contained, in addition to the above-described working medium for heat cycle.

The refrigerant oil is roughly classified into a mineral refrigerant oil and a synthetic refrigerant oil. Examples of the mineral refrigerant oil includes a naphthenic refrigerant oil and a paraffinic refrigerant oil, and typical examples of the synthetic refrigerant oil include an ester-based refrigerant oil, an ether-based refrigerant oil, a hydrocarbon-based refrigerant oil, and so on.

Among them, the refrigerant oil preferably contains at least one type of oil selected from the group consisting of oxygenated synthetic refrigerant oils such as an ester-based refrigerant oil and an ether-based refrigerant oil, a hydrocarbon-based refrigerant oil, and a naphthenic refrigerant oil in terms of compatibility with HCFO-1224yd being the essential working medium component of the present invention, and more preferably contains at least one type of compound selected from the group consisting of a dibasic acid ester, a polyol ester, a complex ester, a polyol carbonic acid ester, polyvinyl ether, a polyalkylene glycol, alkyl benzene, and a naphthene-base oil.

One type of the refrigerant oils may be used independently, or two or more types may be used in combination. Further, the kinematic viscosity of the refrigerant oil at 40°C is preferably 1 $mm^2/s$ or more and 750 $mm^2/s$ or less and more preferably 1 $mm^2/s$ or more and 400 $mm^2/s$ or less in terms of the fact that lubricating properties and sealing property of a compressor do not decrease, the refrigerant oil is satisfactorily compatible with the working medium for heat cycle under low temperature conditions, and suppression of lubricity failure of a refrigerator or a compressor and heat exchange in an evaporator are sufficiently performed. Further, the kinematic viscosity of the refrigerant oil at 100°C is preferably 1 $mm^2/s$ or more and 100 $mm^2/s$ or less and more preferably 1 $mm^2/s$ or more and 50 $mm^2/s$ or less in terms of being able to keep power consumption and abrasion resistance within proper ranges.

When the refrigerant oil is an ester-based refrigerant oil or an ether-based refrigerant oil in particular, carbon atoms and oxygen atoms can be representatively cited as atoms constituting the refrigerant oil. When the ratio of carbon atoms to oxygen atoms constituting the refrigerant oil (carbon atoms/oxygen atoms) (molar ratio) is too small, moisture absorbance of the refrigerant oil becomes high, and when the ratio is too high, a problem of a decrease in compatibility between the refrigerant oil and the working medium for heat cycle is caused. From this viewpoint, it is suitable that the refrigerant oil contains carbon atoms and oxygen atoms at a ratio of 2.0 or more and 7.5 or less by molar ratio represented by carbon atoms/oxygen atoms.

Further, in the case of the hydrocarbon-based refrigerant oil, the working medium for heat cycle and the refrigerant oil are required to circulate together in the heat cycle system. The refrigerant oil being dissolved with the working medium for heat cycle is the most preferred embodiment, but, as long as a refrigerant oil capable of circulating with the working medium for heat cycle in the heat cycle system is selected, a refrigerant oil with low solubility (for example, refrigerant oils disclosed in Japanese Patent No. 2803451) can be used as one component of the composition for a heat cycle system of the present invention. The refrigerant oil is required to have a low kinematic viscosity in order for the refrigerant oil to circulate in the heat cycle system. In the present invention, the kinematic viscosity of the hydrocarbon-based refrigerant oil is preferably 1 $mm^2/s$ or more and 50 $mm^2/s$ or less at 40°C, and particularly preferably 1 $mm^2/s$ or more and 25 $mm^2/s$ or less.

Further, these refrigerant oils may contain a stabilizer to prevent deterioration of the working medium for heat cycle and the refrigerant oil. As the stabilizer, an oxidation resistance improver, a heat resistance improver, a metal deactivator, and so on can be cited, and the content of the stabilizer only needs to fall within a range not significantly decreasing the effects of the present invention and is ordinarily 5 mass% or less and preferably 3 mass% or less with respect to 100 mass% of the composition for a heat cycle system.

(Ester-based refrigerant oil)

As a base oil component of the ester-based refrigerant oil, in view of chemical stability, there can be cited a dibasic acid ester of a dibasic acid and a monohydric alcohol, a polyol ester of a polyol and a fatty acid, a complex ester of a polyol, a polybasic acid, and a monohydric alcohol (or a fatty acid), a polyol carbonate ester, and so on.

(Dibasic acid ester)

As the dibasic acid ester, esters of dibasic acids such as an oxalic acid, a malonic acid, a succinic acid, a glutaric acid, an adipic acid, a pimelic acid, a suberic acid, an azelaic acid, a sebacic acid, a phthalic acid, an isophthalic acid, and a terephthalic acid, particularly dibasic acids with 5 or more and 10 or less carbon atoms (such as a glutaric acid, an adipic acid, a pimelic acid, a suberic acid, an azelaic acid, and a sebacic acid) with monohydric alcohols with 1 or more and 15 or less carbon atoms having a linear or branched alkyl group (such as methanol, ethanol, propanol,

butanol, pentanol, hexanol, heptanol, octanol, nonanol, decanol, undecanol, dodecanol, tridecanol, tetradecanol, and pentadecanol) are preferred. Concrete examples of this dibasic acid ester-based refrigerant oil include glutaric acid ditridecyl, di(2-ethylhexyl) adipate, diisodecyl adipate, ditridecyl adipate, di(3-ethylhexyl) sebacate, and so on.

(Polyol ester)

The polyol ester is an ester synthesized from a polyhydric alcohol (also referred to as a polyol) and a fatty acid (a carboxylic acid), and has a ratio of carbon atoms to oxygen atoms (carbon atoms/oxygen atoms) constituting the polyol ester being 2.0 or more and 7.5 or less and preferably 3.2 or more and 5.8 or less by molar ratio.

As the polyhydric alcohol constituting the polyol ester, there can be cited diols (such as ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol), and polyols having 3 or more and 20 or less hydroxy groups (such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerin (a dimer or trimer of glycerin), 1,3,5-pentanetriol, sorbitol, sorbitan, a sorbitol/glycerin condensate, polyhydric alcohols such as adonitol, arabitol, xylitol, and mannitol, saccharides such as xylose, arabinose, ribose, rhamnose, glucose, fructose, galactose, mannose, sorbose, cellobiose, maltose, isomaltose, trehalose, sucrose, raffinose, gentianose, and melezitose, a partially etherified product thereof, and so on). The polyhydric alcohol constituting the polyol ester may be one type of the above, or two or more types may be contained.

The number of carbon atoms in the fatty acid constituting the polyol ester is not particularly limited, but a fatty acid with 1 or more and 24 or less carbon atoms is ordinarily used. A linear fatty acid or a branched fatty acid is preferred. As the linear fatty acid, there can be cited an acetic acid, a propionic acid, a butanoic acid, a pentanoic acid, a hexanoic acid, a heptanoic acid, an octanoic acid, a nonanoic acid, a decanoic acid, an undecanoic acid, a dodecanoic acid, a tridecanoic acid, a tetradecanoic acid, a pentadecanoic acid, a hexadecanoic acid, a heptadecanoic acid, an octadecanoic acid, a nonadecanoic acid, an eicosanoic acid, an oleic acid, a linoleic acid, a linolenic acid, and so on, and a hydrocarbon group to be bonded to a carboxyl group may be all saturated hydrocarbon or may have an unsaturated hydrocarbon. Further, as the branched fatty acid, there can be cited 2-methylpropanoic acid, 2-methylbutanoic acid, 3-methylbutanoic acid, 2,2-dimethylpropanoic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, 2,2,3-trimethylbutanoic acid, 2,3,3-trimethylbutanoic acid, 2-ethyl-2-methylbutanoic acid, 2-ethyl-3-methylbutanoic acid, 2-methylheptanoic acid, 3-methylheptanoic acid, 4-methylheptanoic acid, 5-methylheptanoic acid, 6-methylheptanoic acid, 2-ethylhexanoic acid, 3-ethylhexanoic acid, 4-ethylhexanoic acid, 2,2-dimethylhexanoic acid, 2,3-dimethylhexanoic acid, 2,4-dimethylhexanoic acid, 2,5-dimethylhexanoic acid, 3,3-dimethylhexanoic acid, 3,4-dimethylhexanoic acid, 3,5-dimethylhexanoic acid, 4,4-dimethylhexanoic acid, 4,5-dimethylhexanoic acid, 5,5-dimethylhexanoic acid, 2-propylpentanoic acid, 2-methyloctanoic acid, 3-methyloctanoic acid, 4-methyloctanoic acid, 5-methyloctanoic acid, 6-methyloctanoic acid, 7-methyloctanoic acid, 2,2-dimethylheptanoic acid, 2,3-dimethylheptanoic acid, 2,4-dimethylheptanoic acid, 2,5-dimethylheptanoic acid, 2,6-dimethylheptanoic acid, 3,3-dimethylheptanoic acid, 3,4-dimethylheptanoic acid, 3,5-dimethylheptanoic acid, 3,6-dimethylheptanoic acid, 4,4-dimethylheptanoic acid, 4,5-dimethylheptanoic acid, 4,6-dimethylheptanoic acid, 5,5-dimethylheptanoic acid, 5,6-dimethylheptanoic acid, 6,6-dimethylheptanoic acid, 2-methyl-2-ethylhexanoic acid, 2-methyl-3-ethylhexanoic acid, 2-methyl-4-ethylhexanoic acid, 3-methyl-2-ethylhexanoic acid, 3-methyl-3-ethylhexanoic acid, 3-methyl-4-ethylhexanoic acid, 4-methyl-2-ethylhexanoic acid, 4-methyl-3-ethylhexanoic acid, 4-methyl-4-ethylhexanoic acid, 5-methyl-2-ethylhexanoic acid, 5-methyl-3-ethylhexanoic acid, 5-methyl-4-ethylhexanoic acid, 2-ethylheptanoic acid, 3-methyloctanoic acid, 3,5,5-trimethylhexanoic acid, 2-ethyl-2,3,3-trimethylbutyric acid, 2,2,4,4-tetramethylpentanoic acid, 2,2,3,3-tetramethylpentanoic acid, 2,2,3,4-tetramethylpentanoic acid, 2,2-diisopropylpropanoic acid, and so on. The fatty acid may be an ester of one type or two or more types of fatty acids selected from these.

The polyol constituting the ester may be one type, or a mixture of two or more types. Further, the fatty acid constituting the ester may be a single component, or an ester of two or more types of fatty acids. The fatty acid may be one type, or a mixture of two or more types. Further, the polyol ester may have a free hydroxyl group.

As the concrete polyol ester, esters of hindered alcohols such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol) are more preferred, esters of neopentyl glycol, trimethylolethane, trimethylolpropane, trimethylolbutane, pentaerythritol, and di-(pentaerythritol) are still more preferred, and esters of polyhydric alcohols such as neopentyl glycol, trimethylolpropane, pentaerythritol, and di-(pentaerythritol) and a fatty acid with 2 or more and 20 or less carbon atoms are preferred.

The fatty acid constituting such a polyhydric alcohol fatty acid ester may be only a fatty acid having a linear alkyl group or may be selected from fatty acids having a branched structure. Alternatively, the fatty acid may be a mixed ester of linear and branched fatty acids. Further, as the fatty acid constituting the ester, two or more types selected from the above-described fatty acids may be used.

As a concrete example, in the case of a mixed ester of linear and branched fatty acids, the molar ratio of a linear fatty acid with 4 or more and 6 or less carbon atoms to a branched fatty acid with 7 or more and 9 or less carbon atoms is 15: 85 to 90: 10, preferably 15: 85 to 85: 15, more preferably 20: 80 to 80: 20, further preferably 25: 75 to 75: 25, and most preferably 30: 70 to 70: 30. Further, the proportion of the total amount of the linear fatty acid with 4 or more and 6 or less carbon atoms and the branched fatty acid with 7 or more and 9 or less carbon atoms to the entire amount of the fatty acids constituting the polyhydric alcohol fatty acid ester is 20 mol% or more. The fatty acid composition should be selected considering achievement of both sufficient compatibility with the working medium for heat cycle and a viscosity required as the refrigerant oil. Incidentally, the proportion of the fatty acids mentioned here is a value based on the entire amount of the fatty acids constituting the polyhydric alcohol fatty acid ester contained in the refrigerant oil.

(Complex ester)

The complex ester is an ester of a fatty acid and a dibasic acid and a monohydric alcohol and a polyol. For the fatty acid, the dibasic acid, the monohydric alcohol, and the polyol, the same as those described above can be used.

As the fatty acid, the ones exemplified as the fatty acids of the polyol ester described above can be cited. As the dibasic acid, there can be cited an oxalic acid, a malonic acid, a succinic acid, a glutaric acid, an adipic acid, a pimelic acid, a suberic acid, an azelaic acid, a sebacic acid, a phthalic acid, an isophthalic acid, a terephthalic acid, and so on.

As the polyol, the ones exemplified as the polyhydric alcohols of the polyol ester described above can be cited. The complex ester is an ester of these fatty acid, dibasic acid, monohydric alcohol, and polyol, each of which may be a single component, or may be an ester composed of a plurality of components.

(Polyol carbonate ester)

The polyol carbonate ester is an ester of a carbonic acid and a polyol. As the polyol, there can be cited polyglycols obtained by homopolymerizing or copolymerizing a diol (the same one as above) (such as a polyalkylene glycol, its ether compound, and modified compounds thereof), a polyol (the same one as above), one obtained by adding a polyglycol to a polyol, and so on.

As the polyalkylene glycol, the same ones as those to be exemplified as the polyalkylene glycol below can be used without any limitation in particular, but there can be cited one obtained by a method of polymerizing an alkylene oxide with 2 or more and 4 or less carbon atoms (such as an ethylene oxide or a propylene oxide) using water or an alkali hydroxide as an initiator, or the like. Further, it may be one obtained by etherifying a hydroxyl group of a polyalkylene glycol. Oxyalkylene units in the polyalkylene glycol may be the same in one molecule, or two or more types of oxyalkylene units may be contained. At least oxypropylene units are preferably contained in one molecule. Further, the polyol carbonate ester may be a ring-opening polymer of a cyclic alkylene carbonate.

(Ether-based refrigerant oil)

Examples of a base oil component of the ether-based refrigerant oil include polyvinyl ether, a polyalkylene glycol, and so on.

(Polyvinyl ether)

Examples of the polyvinyl ether include one obtained by polymerizing a vinyl ether monomer, one obtained by copolymerizing a vinyl ether monomer and a hydrocarbon monomer having an olefinic double bond, and a copolymer of polyvinyl ether and an alkylene glycol or a polyalkylene glycol or a monoether thereof.

The ratio of carbon atoms to oxygen atoms constituting the polyvinyl ether (carbon atoms/oxygen atoms) is 2.0 or more and 7.5 or less, and preferably 2.5 or more and 5.8 or less by molar ratio. When this ratio (carbon atoms/oxygen atoms) is less than this range, hygroscopicity of the refrigerant oil increases, and when this ratio exceeds this range, compatibility between the refrigerant oil and the working medium for heat cycle decreases. Further, a weight-average molecular weight of the polyvinyl ether is preferably 200 or more and 3000 or less, and more preferably 500 or more and 1500 or less. The kinematic viscosity of the ether-based refrigerant oil at 40°C is preferably 1 $mm^2/s$ or more and 750 $mm^2/s$ or less, and more preferably 1 $mm^2/s$ or more and 400 $mm^2/s$ or less. Further, the kinematic viscosity of the ether-based refrigerant oil at 100°C is preferably 1 $mm^2/s$ or more and 100 $mm^2/s$ or less, and more preferably 1 $mm^2/s$ or more and 50 $mm^2/s$ or less.

(Structure of polyvinyl ether)

One type of the vinyl ether monomers may be used independently, or two or more types may be used in combination. As the hydrocarbon monomer having an olefinic double bond, there can be cited ethylene, propylene, various forms of butene, various forms of pentene, various forms of hexene, various forms of heptene, various forms of octene, diisobutylene, triisobutylene, styrene, α-methylstyrene, various forms of alkyl-substituted styrene, and so on. One type of the hydrocarbon monomers having an olefinic double bond may be used independently, or two or more types may be used in combination.

The polyvinyl ether copolymer may be either a block copolymer or a random copolymer. One type of the polyvinyl ether may be used independently, or two or more types may be used in combination.

The polyvinyl ether to be used preferably has structural units represented by the following general formula (1).

[Chemical formula 1]

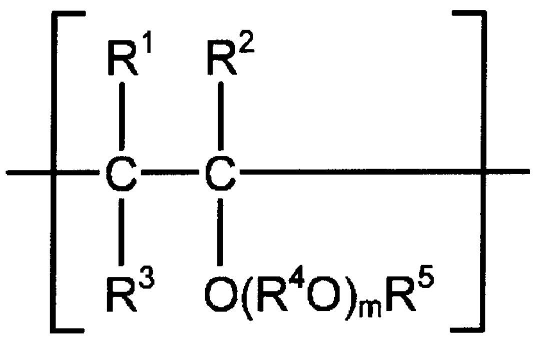

···(1)

In the general formula (1), $R^1$, $R^2$ and $R^3$ may be the same as or different from one another and each represent a hydrogen atom or a hydrocarbon group with 1 or more and 8 or less carbon atoms, $R^4$ represents a bivalent hydrocarbon group with 1 or more and 10 or less carbon atoms or an ether bond oxygen-containing divalent hydrocarbon group with 2 or more and 20 or less carbon atoms, $R^5$ represents a hydrocarbon group with 1 or more and 20 or less carbon atoms, m represents a number such that an average value of m in the polyvinyl ether is 0 or more and 10 or less, $R^1$, $R^2$, $R^3$, $R^4$, and $R^5$ may be the same or different in each of the structural units, and when m represents 2 or more in one structural unit, a plurality of $R^4O$ may be the same or different.

In the above-described general formula (1), at least one of $R^1$, $R^2$ and $R^3$ is preferably a hydrogen atom, and all thereof are particularly preferably a hydrogen atom. In the general formula (1), m is 0 or more and 10 or less, preferably 0 or more and 5 or less, and more preferably 0. In the general formula (1), $R^5$ represents a hydrocarbon group with 1 or more and 20 or less carbon atoms. Concrete examples of this hydrocarbon group include alkyl groups such as a methyl group, an ethyl group, a n-propyl group, an isopropyl group, a n-butyl group, an isobutyl group, a sec-butyl group, a tert-butyl group, various forms of a pentyl group, various forms of a hexyl group, various forms of a heptyl group, and various forms of an octyl group, cycloalkyl groups such as a cyclopentyl group, a cyclohexyl group, various forms of a methylcyclohexyl group, various forms of an ethylcyclohexyl group, and various forms of a dimethylcyclohexyl group, aryl groups such as a phenyl group, various forms of a methylphenyl group, various forms of an ethylphenyl group, and various forms of a dimethylphenyl group, and arylalkyl groups such as a benzyl group, various forms of a phenylethyl group, and various forms of a methylbenzyl group, and an alkyl group, particularly an alkyl group with 1 or more and 5 or less carbon atoms is preferred.

The polyvinyl ether in this embodiment may be a homopolymer constituted by one type of the structural units represented by the general formula (1) or a copolymer constituted by 2 or more types of the structural units. The copolymer may be either a block copolymer or a random copolymer.

The polyvinyl ether in this embodiment may be one constituted by only the structural units represented by the above general formula (1), but may be a copolymer further including structural units represented by the following general formula (2). In this case, the copolymer may be either a block copolymer or a random copolymer.

[Chemical formula 2]

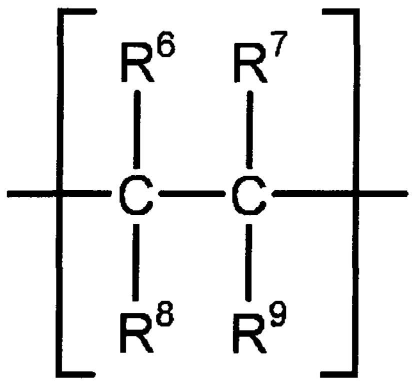

···(2)

In the general formula (2), $R^6$, $R^7$, $R^8$, and $R^9$ may be the same as or different from one another and each represent a hydrogen atom or a hydrocarbon group with 1 or more and 20 or less carbon atoms.

(Poly vinyl ether monomer)

As the vinyl ether monomer, a compound represented by the following general formula (3) can be cited.

[Chemical formula 3]

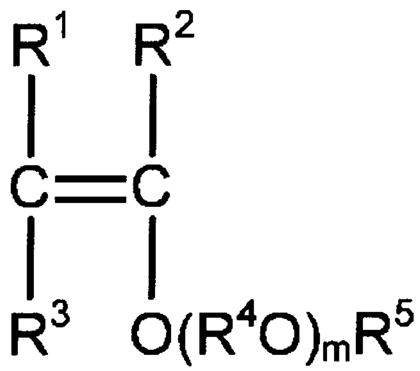

···(3)

In the general formula (3), $R^1$, $R^2$, $R^3$, $R^4$, $R^5$, and m represent the same meaning as in $R^1$, $R^2$, $R^3$, $R^4$, $R^5$ and m in the general formula (1) respectively.

There are various vinyl ether monomers corresponding to the above-described polyvinyl ether. For example, there can be cited vinyl methyl ether, vinyl ethyl ether, vinyl-n-propyl ether, vinyl-isopropyl ether, vinyl-n-butyl ether, vinyl-isobutyl ether, vinyl-sec-butyl ether, vinyl tert-butyl ether, vinyl-n-pentyl ether, vinyl-n-hexyl ether, vinyl-2-methoxyethyl ether, vinyl-2-ethoxyethyl ether, vinyl-2-methoxy-1-methylethyl ether, vinyl-2-methoxy-propyl ether, vinyl-3,6-dioxaheptyl ether, vinyl-3,6,9-trioxadecyl ether, vinyl-1,4-dimethyl-3,6-dioxaheptyl ether, vinyl-1,4,7-trimethyl-3,6,9-trioxadecyl ether, vinyl-2,6-dioxa-4-heptyl ether, vinyl-2,6,9-trioxa-4-decyl ether, 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, 2-tert-butoxypropene, 1-methoxy-1-butene, 1-ethoxy-1-butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, 2-isobutoxy-2-butene, 2-sec-butoxy-2-butene, 2-tert-butoxy-2-butene, and so on. These vinyl ether monomers can be produced by a publicly-known method.

(Terminal of polyvinyl ether)

The terminal of the polyvinyl ether having the structural units represented by the above general formula (1) to

be used as a base oil component of the refrigerant oil for the composition for a heat cycle system of the present invention can be converted to a desired structure by the method disclosed in Examples or by a publicly-known method. Examples of the group to which the terminal is to be converted include a saturated hydrocarbon group, an ether group, a hydroxy group, a ketone group, an amide group, a nitrille group, and so on.

The polyvinyl ether to be used as the base oil component of the refrigerant oil for the composition for a heat cycle system of the present invention is suitably one having a terminal structure represented by any of the following general formulae (4) to (8).

[Chemical formula 4]

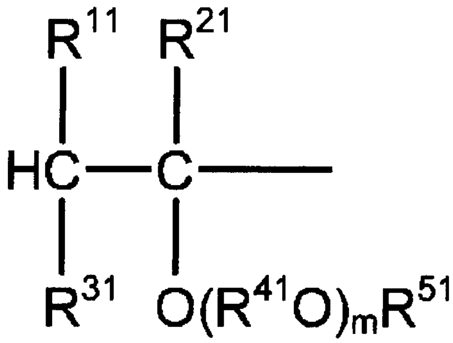

···(4)

In the general formula (4), $R^{11}$, $R^{21}$, and $R^{31}$ may be the same as or different from one another and each represent a hydrogen atom or a hydrocarbon group with 1 or more and 8 or less carbon atoms, $R^{41}$ represents a divalent hydrocarbon group with 1 or more and 10 or less carbon atoms or an ether bond oxygen-containing divalent hydrocarbon group with 2 or more and 20 or less carbon atoms, $R^{51}$ represents a hydrocarbon group with 1 or more and 20 or less carbon atoms, m represents a number such that an average value of m in the polyvinyl ether is 0 or more and 10 or less, and when m represents 2 or more, a plurality of $R^{41}O$ may be the same or different.

[Chemical formula 5]

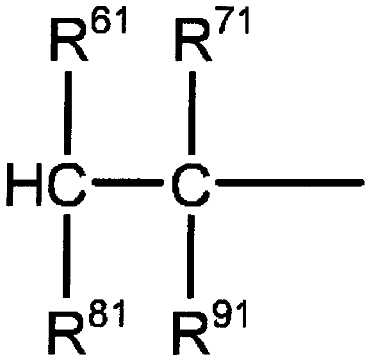

···(5)

In the general formula (5), $R^{61}$, $R^{71}$, $R^{81}$, and $R^{91}$ may be the same as or different from one another and each represent a hydrogen atom or a hydrocarbon group with 1 or more and 20 or less carbon atoms.

[Chemical formula 6]

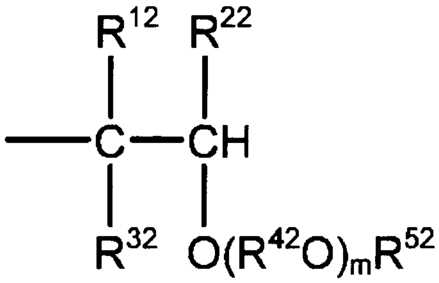

...(6)

In the general formula (6), $R^{12}$, $R^{22}$, and $R^{32}$ may be the same as or different from one another and each represent a hydrogen atom or a hydrocarbon group with 1 or more and 8 or less carbon atoms, $R^{42}$ represents a divalent hydrocarbon group with 1 or more and 10 or less carbon atoms or an ether bond oxygen-containing divalent hydrocarbon group with 2 or more and 20 or less carbon atoms, $R^{52}$ represents a hydrocarbon group with 1 or more and 20 or less carbon atoms, m represents a number such that an average value of m in the polyvinyl ether is 0 or more and 10 or less, and when m represents 2 or more, a plurality of $R^{42}O$ may be the same or different.

[Chemical formula 7]

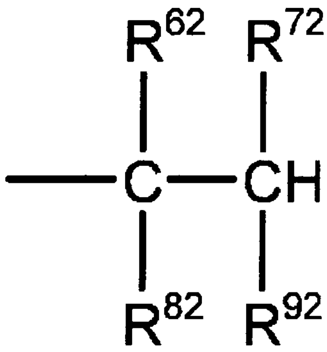

...(7)

In the general formula (7), $R^{62}$, $R^{72}$, $R^{82}$, and $R^{92}$ may be the same as or different from one another and each represent a hydrogen atom or a hydrocarbon group with 1 or more and 20 or less carbon atoms.

[Chemical formula 8]

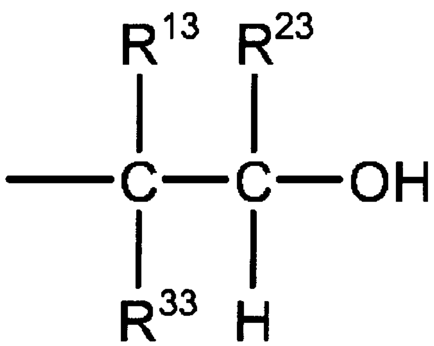

...(8)

In the general formula (8), $R^{13}$, $R^{23}$, and $R^{33}$ may be the same as or different from one another and each represent a hydrogen atom or a hydrocarbon group with 1 or more and 8 or less carbon atoms.

(Producing method of polyvinyl ether)

The polyvinyl ether in this embodiment can be produced by subjecting the above-described monomer to radical polymerization, cation polymerization, radiation polymerization, or the like. After completion of polymerization reaction,

an ordinary separation/purification method is performed as necessary, and thereby the intended polyvinyl ether having the structural units represented by the general formula (1) is obtained.

(Polyalkylene glycol)

As the polyalkylene glycol, there can be cited one obtained by a method of polymerizing an alkylene oxide with 2 or more and 4 or less carbon atoms (such as an ethylene oxide or a propylene oxide) using water or an alkali hydroxide as an initiator, or the like. Further, it may be one obtained by etherifying a hydroxyl group of the polyalkylene glycol. Oxyalkylene units in the polyalkylene glycol may be the same in one molecule or two or more types of oxyalkylene units may be contained. At least oxypropylene units are preferably contained in one molecule.
Concrete examples of the polyalkylene glycol include a compound represented by the following general formula (9), for example.

$$R^{101}\text{-}[(OR^{102})_k\text{-}OR^{103}]_l \ldots \qquad (9)$$

In the general formula (9), $R^{101}$ represents a hydrogen atom, an alkyl group with 1 or more and 10 or less carbon atoms, an acyl group with 2 or more and 10 or less carbon atoms, or an aliphatic hydrocarbon group with 1 or more 10 or less carbon atoms having 2 or more and 6 or less binding sites, $R^{102}$ represents an alkylene group with 2 or more 4 or less carbon atoms, $R^{103}$ represents a hydrogen atom, an alkyl group with 1 or more and 10 or less carbon atoms, or an acyl group with 2 or more and 10 or less carbon atoms, 1 represents an integer of 1 or more and 6 or less, and k represents a number such that an average value of k × 1 is 6 or more and 80 or less.
In the above-described general formula (9), the alkyl group in $R^{101}$ and $R^{103}$ may be linear, branched or cyclic. Concrete examples of the alkyl group include a methyl group, an ethyl group, a n-propyl group, an isopropyl group, various forms of a butyl group, various forms of a pentyl group, various forms of a hexyl group, various forms of a heptyl group, various forms of an octyl group, various forms of a nonyl group, various forms of a decyl group, a cyclopentyl group, a cyclohexyl group, and so on. When the number of carbon atoms in the alkyl group exceeds 10, the compatibility between the refrigerant oil and the working medium for heat cycle sometimes decreases, thus leading to phase separation. The number of carbon atoms in the alkyl group is preferably 1 or more and 6 or less.
Further, the alkyl group moiety in the acyl group in $R^{101}$ and $R^{103}$ may be linear, branched or cyclic. Concrete examples of the alkyl group moiety in the acyl group include various groups with 1 or more and 9 or less carbon atoms similarly to the concrete examples of the above-described alkyl group. When the number of carbon atoms in the acyl group exceeds 10, the compatibility between the refrigerant oil and the working medium for heat cycle sometimes decreases, thus leading to phase separation. The number of carbon atoms in the acyl group is preferably 2 or more and 6 or less.
In the case where $R^{101}$ and $R^{103}$ both are an alkyl group or an acyl group, $R^{101}$ and $R^{103}$ may be the same as or different from each other.
Further, in the case of 1 being 2 or more, the plurality of $R^{103}$ in one molecule may be the same as or different from each other.
In the case of $R^{101}$ being an aliphatic hydrocarbon group with 1 or more and 10 or less carbon atoms having 2 or more and 6 or less binding sites, the aliphatic hydrocarbon group may be a chain group or a cyclic group. Examples of the aliphatic hydrocarbon group having two binding sites include an ethylene group, a propylene group, a butylene group, a pentylene group, a hexylene group, a heptylene group, an octylene group, a nonylene group, a decylene group, a cyclopentylene group, a cyclohexylene group, and so on. Further, examples of an aliphatic hydrocarbon group having 3 or more and 6 or less binding sites include trimethylolpropane, glycerin, pentaerythritol, sorbitol, 1,2,3-trihydroxycyclohexane, and a residue having a hydroxyl group removed from a polyhydric alcohol such as 1,3,5-trihydroxycyclohexane.
When the number of carbon atoms of the aliphatic hydrocarbon group exceeds 10, the compatibility between the refrigerant oil and the working medium hor heat cycle sometimes decreases, thus leading to phase separation. The number of carbon atoms is preferably 2 or more and 6 or less.
In the above-described general formula (9), $R^{102}$ is an alkylene group with 2 or more and 4 or less carbon atoms, and as an oxyalkylene group of a repeating unit, an oxyethylene group, an oxypropylene group, an oxybutylene group can be cited. Oxyalkylene groups in one molecule may be the same, and two or more types of oxyalkylene groups may be contained, but one containing at least oxypropylene units in one molecule is preferred, and particularly, one containing 50 mol% or more of oxypropylene units in the oxyalkylene unit is suitable.
In the above-described general formula (9), 1 is an integer of 1 or more and 6 or less and is determined depending on the number of binding sites of $R^{101}$. For example, in the case of $R^{101}$ being an alkyl group or an acyl group, 1 is 1, and in the case of $R^{101}$ being an aliphatic hydrocarbon group having 2, 3,4, 5 or 6 binding sites, 1 is 2, 3, 4, 5 or 6. Further, k is a number such that an average value of k × 1 is 6 or more and 80 or less, and when the average

value of k × 1 deviates from the above range, the object of the present invention cannot be accomplished sufficiently.

As the structure of the polyalkylene glycol, polypropylene glycol dimethyl ether represented by the following general formula (10) and polyethylene polypropylene glycol dimethyl ether represented by the following general formula (11) are suitable in view of economic efficiency and the above-described effects, and further, polypropylene glycol monobutyl ether represented by the following general formula (12), polypropylene glycol monomethyl ether represented by the following general formula (13), polyethylene polypropylene glycol monomethyl ether represented by the following general formula (14), polyethylene polypropylene glycol monobutyl ether represented by the following general formula (15), and polypropylene glycol diacetate represented by the following general formula (16) are suitable in view of economic efficiency, and the like.

$$CH_3O\text{-}(C_3H_6O)_h\text{-}CH_3 \ldots \quad (10)$$

In the general formula (10), h represents a number of 6 or more and 80 or less.

$$CH_3O\text{-}(C_2H_4O)_i\text{-}(C_3H_6O)_j\text{-}CH_3 \ldots \quad (11)$$

In the general formula (11), i and j each are 1 or more and the sum of i and j represents a number of 6 or more and 80 or less.

$$C_4H_9O\text{-}(C_3H_6O)_h\text{-}H \ldots \quad (12)$$

In the general formula (12), h represents a number of 6 or more and 80 or less.

$$CH_3O\text{-}(C_3H_6O)_h\text{-}H \ldots \quad (13)$$

In the general formula (13), h represents a number of 6 or more and 80 or less.

$$CH_3O\text{-}(C_2H_4O)_i\text{-}(C_3H_6O)_j\text{-}H \ldots \quad (14)$$

In the general formula (14), i and j each are 1 or more and the sum of i and j represents a number of 6 or more and 80 or less.

$$C_4H_9O\text{-}(C_2H_4O)_i\text{-}(C_3H_6O)_j\text{-}H \quad (15)$$

In the general formula (15), i and j each are 1 or more and the sum of i and j represents a number of 6 or more and 80 or less.

$$CH_3COO\text{-}(C_3H_6O)_h\text{-}COCH_3 \quad (16)$$

In the general formula (16), h represents a number of 6 or more and 80 or less.

One type of the polyalkylene glycols may be used independently, or two or more types may be used in combination.

The kinematic viscosity of the polyalkylene glycol at 40°C represented by the above-described general formula (9) is preferably 1 $mm^2/s$ or more and 750 $mm^2/s$ or less, and more preferably 1 $mm^2/s$ or more and 400 $mm^2/s$ or less. Further, the kinematic viscosity of the polyalkylene glycol at 100°C represented by the general formula (9) is preferably 1 $mm^2/s$ or more and 100 $mm^2/s$ or less, and more preferably 1 $mm^2/s$ or more and 50 $mm^2/s$ or less.

<Hydrocarbon-based refrigerant oil>

As a base oil component of the hydrocarbon-based refrigerant oil, alkyl benzene can be used.

As the alkyl benzene, branched alkyl benzene resulting from synthesis of a polymer of propylene and benzene as materials using a catalyst such as hydrogen fluoride, or linear alkyl benzene resulting from synthesis of normal paraffin and benzene as materials using the same catalyst can be used. The number of carbon atoms in the alkyl group is preferably 1 or more and 30 or less and more preferably 4 or more and 20 or less from the viewpoint of making the viscosity as a base oil component of the hydrocarbon-based refrigerant oil suitable. Further, the number of alkyl groups in one molecule of the alkyl benzene is preferably 1 or more and 4 or less and more preferably 1 or more and 3 or less so as to make the viscosity fall within a set range depending on the number of carbon atoms in the alkyl group.

Further, the hydrocarbon-based refrigerant oil is required to circulate in the heat cycle system with the working

medium for heat cycle. The hydrocarbon-based refrigerant oil being dissolved with the working medium for heat cycle is the most preferred embodiment, but, as long as a refrigerant oil capable of circulating with the working medium for heat cycle in the heat cycle system is selected, a refrigerant oil with low solubility can be used as one component of the composition for a heat cycle system of the present invention. The refrigerant oil is required to have a low kinematic viscosity in order for the refrigerant oil to circulate in the heat cycle system. In the present invention, the kinematic viscosity of the alkyl benzene at 40°C is preferably 1 $mm^2/s$ or more and 100 $mm^2/s$ or less, and particularly preferably 1 $mm^2/s$ or more and 50 $mm^2/s$ or less.

One type of these refrigerant oils may be used independently, or two or more types may be used in combination.

The content of the hydrocarbon-based refrigerant oil in the composition for a heat cycle system only needs to fall within a range not significantly decreasing the effects of the present invention, and is preferably 10 parts by mass or more and 100 parts by mass or less and more preferably 20 parts by mass or more and 50 parts by mass or less with respect to 100 parts by mass of the working medium for heat cycle.

<Mineral refrigerant oil>

As the mineral refrigerant oil, the naphthenic refrigerant oil having good compatibility with the working medium for heat cycle out of the paraffinic refrigerant oil and the naphthenic refrigerant oil can be used.

The naphthenic refrigerant oil is a hydrocarbon having at least one saturated ring (naphthene ring) in one molecule, and is a ring compound mainly composed of cyclopentane with five carbon atoms and cyclohexane with six carbon atoms. Further, as the naphthenic refrigerant oil, a naphthenic base oil made by refining a lubricating oil distillate obtained by subjecting a naphthenic crude to atmospheric distillation or vacuum distillation appropriately combined with refining treatments such as solvent deasphalting, solvent extraction, hydrogenolysis, solvent dewaxing, catalytic dewaxing, hydrogenation refining, and clay treatment, or the like can be used.

Further, the mineral refrigerant oil is required to circulate in the heat cycle system with the working medium for heat cycle. The mineral refrigerant oil being dissolved with the working medium for heat cycle is the most preferred embodiment, but, as long as a refrigerant oil capable of circulating with a refrigerant oil for heat cycle in the heat cycle system is selected, a refrigerant oil with low solubility can be used as one component of the composition for a heat cycle system of the present invention. The refrigerant oil is required to have a low kinematic viscosity in order for the refrigerant oil to circulate in the heat cycle system. In the present invention, the kinematic viscosity of the naphthenic refrigerant oil at 40°C is preferably 1 $mm^2/s$ or more and 300 $mm^2/s$ or less, and particularly preferably 1 $mm^2/s$ or more and 100 $mm^2/s$ or less.

One type of these refrigerant oils may be used independently, or two or more types may be used in combination.

These refrigerant oils are preferably mixed with the working medium for heat cycle to be used as the composition for a heat cycle system. At this time, a mixing ratio of the refrigerant oil is preferably 5 mass% or more and 60 mass% or less and more preferably 10 mass% or more and 50 mass% or less with respect to the total amount of the composition for a heat cycle system.

<Other optional component>

The composition for a heat cycle system can contain a publicly-known optional component additionally within a range not impairing the effects of the present invention. As such an optional component, for example, a leak detecting substance can be cited, and examples of this leak detecting substance to be contained optionally include an ultraviolet fluorescent dye, an odor gas, an odor masking agent, and so on.

Examples of the ultraviolet fluorescence dye include publicly-known ultraviolet fluorescence dyes used for the heat cycle system together with the working medium composed of a halogenated hydrocarbon conventionally, such as those disclosed in US Patent No. 4249412, Japanese Translation of PCT International Application Publication No. H10-502737, Japanese Translation of PCT International Application Publication No. 2007-511645, Japanese Translation of PCT International Application Publication No. 2008-500437, and Japanese Translation of PCT International Application Publication No. 2008-531836.

Examples of the odor masking agent include publicly-known aroma chemicals to be used for the heat cycle system together with the working medium composed of a halogenated hydrocarbon conventionally, such as those disclosed in Japanese Translation of PCT International Application Publication No. 2008-500437 and Japanese Translation of PCT International Application Publication No. 2008-531836.

In the case of using the leak detecting substance, a solubilizing agent for improving solubility of the leak detecting substance to the working medium for heat cycle may be used.

Examples of the solubilizing agent include those disclosed in Japanese Translation of PCT International Application Publication No. 2007-511645, Japanese Translation of PCT International Application Publication No. 2008-500437, and Japanese Translation of PCT International Application Publication No. 2008-531836.

The content of the leak detecting substance in the composition for a heat cycle system only needs to fall within a range not significantly decreasing the effects of the present invention, and is preferably 2 parts by mass or less and more preferably 0.5 parts by mass or less with respect to 100 parts by mass of the working medium for heat cycle.

[Heat cycle system]

The heat cycle system of the present invention is a system using the composition for a heat cycle system of the present invention. The heat cycle system of the present invention may be a heat pump system utilizing heat obtained by a condenser or may be a refrigeration cycle system utilizing coldness obtained by an evaporator.

As the heat cycle system of the present invention, concretely, there can be cited a refrigerating apparatus, an air-conditioning apparatus, a power generation system, a heat transport apparatus, a secondary cooling machine, and so on. Among them, the heat cycle system of the present invention is preferably used as an air-conditioning apparatus to be often disposed outdoors or the like due to being able to efficiently exhibit heat cycle performance even in a high-temperature working environment. Further, the heat cycle system of the present invention is preferably used also as a refrigerating apparatus.

As the power generation system, a power generation system by Rankine cycle system is preferred. As the power generation system, concretely, there can be cited as an example a system in which in an evaporator, a working medium is heated by geothermal energy, solar heat, waste heat in a medium-to-high temperature range at about 50°C or more and 200°C or less, or the like, the vaporized working medium in a high temperature and high pressure state is adiabatically expanded by an expansion device, and a power generator is driven by the work generated by the adiabatic expansion to thereby perform power generation.

Further, the heat cycle system of the present invention may be a heat transport apparatus. As the heat transport apparatus, a latent heat transport apparatus is preferred. As the latent heat transport apparatus, there can be cited a heat pipe conducting latent heat transport utilizing a phenomenon such as evaporation, boiling, or condensation of a working medium filled in an apparatus and a two-phase closed thermosiphon apparatus. The heat pipe is applied to a relatively small-sized cooling apparatus such as a cooling apparatus of a heat generation part of a semiconductor element and electronic equipment. The two-phase closed thermosiphon apparatus is widely utilized for a gas/gas heat exchanger, accelerating snow melting and preventing freezing of roads, and the like because it does not require a wick and its structure is simple.

Concrete examples of the refrigerating apparatus include showcases (such as a built-in showcase and a separate showcase), an industrial fridge-freezer, a vending machine, an ice making machine, and so on.

Concrete examples of the air-conditioning apparatus include a room air-conditioner, packaged air-conditioners (such as a store packaged air-conditioner, a building packaged air-conditioner, and a plant packaged air-conditioner), a heat source equipment chilling unit, a gas engine heat pump, a train air-conditioning system, an automobile air-conditioning system, and so on.

As the heat source equipment chilling unit, there can be cited, for example, a volume compression refrigerator and a centrifugal refrigerator. In the centrifugal refrigerator, an amount of the working medium to be filled is large, thereby making it possible to obtain the effects of the present invention more significantly.

Here, the centrifugal refrigerator is a refrigerator using a centrifugal compressor. The centrifugal refrigerator is one type of a vapor compression refrigerator, and is also called a turbo refrigerator ordinarily. The centrifugal compressor includes an impeller, and performs compression by the rotating impeller discharging a working medium to an outer peripheral portion. The centrifugal refrigerator is used in a semiconductor factory, a cold water producing plant in the petrochemical industry, and the like in addition to an office building, district cooling and heating, and cooling and heating in a hospital.

The centrifugal refrigerator may be either a low-pressure centrifugal refrigerator or a high-pressure centrifugal refrigerator, but is preferred to be a low-pressure centrifugal refrigerator. Incidentally, the low-pressure centrifugal refrigerator is a centrifugal refrigerator using a working medium to which High Pressure Gas Safety Act is not applied such as, for example, CFC-11, HCFC-123, or HFC-245fa, namely a working medium that does not apply to a "liquefied gas that has a pressure to be 0.2 MPa or more at its normal operating temperature and whose pressure is currently 0.2 MPa or more, or a liquefied gas whose temperature is 35°C or less in the case of the pressure being 0.2 MPa or more."

Hereinafter, there will be explained the refrigeration cycle system as one example of the heat cycle system of the present invention. The refrigeration cycle system is a system utilizing coldness obtained by an evaporator.

FIG. 1 is a schematic configuration diagram illustrating a refrigeration cycle system 10 being one example of the heat cycle system of the present invention. As illustrated in FIG. 1, the refrigeration cycle system 10 includes: a compressor 11 that compresses a vapor A of the working medium for heat cycle to make it into a vapor B of the working medium for heat cycle at high temperature and high pressure; a condenser 12 that cools and liquefies the vapor B of the working medium for heat cycle emitted from the compressor 11 to make it into a working medium for heat cycle C at low temperature and high pressure; an expansion valve 13 that expands the working medium for heat cycle C emitted

from the condenser 12 to make it into a working medium for heat cycle D at low temperature and low pressure; and an evaporator 14 that heats the working medium for heat cycle D emitted from the expansion valve 13 to make it into the vapor A of the working medium for heat cycle at high temperature and low pressure. The refrigeration cycle system 10 further includes a pump 15 that supplies a load fluid E to the evaporator 14; and a pump 16 that supplies a fluid F to the condenser 12.

In the refrigeration cycle system 10, (i) to (iv) cycles below are repeated.

(i) Compressing the vapor A of the working medium for heat cycle emitted from the evaporator 14 in the compressor 11 to make it into the vapor B of the working medium for heat cycle at high temperature and high pressure. Hereinafter, it is referred to as an "AB process."

(ii) Cooling and liquefying the vapor B of the working medium for heat cycle emitted from the compressor 11 by the fluid F in the condenser 12 to make it into the working medium for heat cycle C at low temperature and high pressure. In this event, the fluid F is heated to be made into a fluid F' and emitted from the condenser 12. Hereinafter, it is referred to as a "BC process."

(iii) Expanding the working medium for heat cycle C emitted from the condenser 12 in the expansion valve 13 to make it into the working medium for heat cycle D at low temperature and low pressure. Hereinafter, it is referred to as a "CD process."

(iv) Heating the working medium for heat cycle D emitted from the expansion valve 13 by the load fluid E in the evaporator 14 to make it into the vapor A of the working medium for heat cycle at high temperature and low pressure. In this event, the load fluid E is cooled to be made into a load fluid E' and emitted from the evaporator 14. Hereinafter, it is referred to as a "DA process."

The refrigeration cycle system 10 is a cycle system achieved by an adiabatic and isoentropic change, an isenthalpic change, and an isobaric change. FIG. 2 is a cycle chart illustrating change of state of the working medium for heat cycle in the refrigeration cycle system 10 in FIG. 1 on a pressure-enthalpy line diagram. The change of state of the working medium for heat cycle can be expressed as a trapezoid having A, B, C, and D as vertices when the change is illustrated on the pressure-enthalpy line (curve) diagram illustrated in FIG. 2.

The AB process is a process of performing adiabatic compression in the compressor 11 to make the vapor A of the working medium for heat cycle at high temperature and low pressure into the vapor B of the working medium for heat cycle at high temperature and high pressure, and is indicated by an AB line in FIG. 2.

The BC process is a process of performing isobaric cooling in the condenser 12 to make the vapor B of the working medium for heat cycle at high temperature and high pressure into the working medium for heat cycle C at low temperature and high pressure, and is indicated by a BC line in FIG. 2. The pressure in this event is the condensation pressure. An intersection point $T_1$ on a high enthalpy side of intersection points of the pressure-enthalpy line and the BC line is a condensation temperature, and an intersection point $T_2$ on a low enthalpy side is a condensation boiling temperature. Here, the temperature glide in the case where HCFO-1224yd is a medium mixed with another working medium and is a non-azeotropic mixed medium is represented by the difference between $T_1$ and $T_2$.

The CD process is a process of performing isenthalpic expansion in the expansion valve 13 to make the working medium for heat cycle C at low temperature and high pressure into the working medium for heat cycle D at low temperature and low pressure, and is indicated by a CD line in FIG. 2. Incidentally, when the temperature of the working medium for heat cycle C at low temperature and high pressure is indicated by a temperature $T_3$, $T_2$ - $T_3$ is a degree of supercooling of the working medium for heat cycle (to be hereinafter referred to as "SC" as necessary) in the cycles of (i) to (iv).

The DA process is a process of performing isobaric heating in the evaporator 14 to return the working medium for heat cycle D at low temperature and low pressure to the vapor A of the working medium for heat cycle at high temperature and low pressure, and is indicated by a DA line in FIG. 2. The pressure in this event is the evaporation pressure. An intersection point $T_6$ on a high enthalpy side of intersection points of the pressure-enthalpy line and the DA line is an evaporation temperature. When the temperature of the vapor A of the working medium for heat cycle is indicated by a temperature $T_7$, $T_7$ - $T_6$ is a degree of superheating of the working medium for heat cycle (to be referred to as "SH" as necessary) in the cycles of (i) to (iv). Incidentally, $T_4$ indicates the temperature of the working medium for heat cycle D.

Here, cycle performance of the working medium for heat cycle can be evaluated, for example, by refrigerating capacity (to be hereinafter referred to as "Q" as necessary) and coefficient of performance (to be hereinafter referred to as "COP" as necessary) of the working medium for heat cycle. Q and COP of the working medium for heat cycle are obtained by the following formulae (A) and (B) respectively by using enthalpies $h_A$, $h_B$, $h_C$, and $h_D$ in respective states A (after evaporation, high temperature and low pressure), B (after compression, high temperature and high pressure), C (after condensation, low temperature and high pressure), and D (after expansion, low temperature and low pressure) of the working medium for heat cycle.

$$Q = h_A - h_D \quad ...(A)$$

$$COP = Q/\text{compression work} = (h_A - h_D)/(h_B - h_A) \quad ...(B)$$

Incidentally, COP means the efficiency in the refrigeration cycle system, and a higher COP indicates that a higher output, for example, Q can be obtained by a smaller input, for example, electric energy required to operate a compressor.

In the meantime, Q means the capacity of refrigerating the load fluid, and a higher Q means that the same system can perform a larger amount of work. In other words, having a high Q indicates that target performance can be obtained by a small amount of the working medium for heat cycle, thus enabling downsizing of the system.

According to the heat cycle system of the present invention using the composition for a heat cycle system of the present invention, as compared with the case of using HFC-134a, which has been generally used for an air-conditioning apparatus or the like up to now, in the refrigeration cycle system 10 illustrated in FIG. 1, for example, it is possible to set both Q and COP to a high level, namely a level equal to or higher than that of HFC-134a, while remarkably suppressing the global warming potential.

Further, it is also possible to suppress the temperature glide of the working medium for heat cycle contained in the composition for a heat cycle system to be used to a certain value or lower. In this case, the composition change when the composition for a heat cycle system is put into a refrigerating and air-conditioning apparatus from a pressure container and the change in refrigerant composition in the refrigerating and air-conditioning apparatus when the refrigerant leaks out from the refrigerating and air-conditioning apparatus can be suppressed to lower levels. Further, according to the composition for a heat cycle system of the present invention, it is possible to improve the lubricating properties of HCFO-1224yd contained in the working medium for heat cycle, which is contained in the composition for a heat cycle system. Therefore, in the heat cycle system using the composition, a more efficient circulating state of the working medium for heat cycle can be maintained than ever before and stable operation of the system is enabled.

Incidentally, at the time of operation of the heat cycle system, in order to prevent occurrence of failure due to mixture of moisture and mixture of noncondensing gas such as oxygen, it is preferred to provide a means for suppressing the mixture of them.

The case of moisture to be mixed into the heat cycle system may cause problems when the heat cycle system is used particularly at low temperature. For example, problems such as freezing in a capillary tune, hydrolysis of the working medium for heat cycle and the refrigerant oil, deterioration of material due to acid components generated in the cycle, and generation of contaminants occur. In particular, when the refrigerant oil is a polyalkylene glycol, a polyol ester, or the like, the refrigerant oil is extremely high in hygroscopicity, is likely to cause a hydrolysis reaction, and decreases in characteristics as the refrigerant oil, resulting in a major cause to lose the long-term reliability of the compressor. Accordingly, to suppress the hydrolysis of the refrigerant oil, it is necessary to control the moisture concentration in the heat cycle system.

Examples of a method of controlling the moisture concentration in the heat cycle system include a method of using a moisture removing means such as a drying agent (silica gel, activated alumina, zeolite, or the like), or the like. Bringing the drying agent into contact with a liquid composition for a heat cycle system is preferred in terms of dehydration efficiency. For example, the drying agent is preferably placed at an outlet of the condenser 12 or an inlet of the evaporator 14 to bring the drying agent into contact with the composition for heat cycle system.

As the drying agent, a zeolite-based drying agent is preferred in terms of chemical reactivity between the drying agent and the composition for a heat cycle system and hygroscopic capacity of the drying agent.

As the zeolite-based drying agent, a zeolite-based drying agent containing a compound expressed by the following formula (C) as a main component is preferred in terms of being excellent in hygroscopic capacity in the case of using a refrigerant oil higher in moisture absorption amount than a conventional mineral refrigerant oil.

$$M_{2/n}O \cdot Al_2O_3 \cdot xSiO_2 \cdot yH_2O \ ... \qquad (C)$$

where M is an element of Group 1 such as Na or K or an element of Group 2 such as Ca, n is a valence of M, and x, y are values determined by a crystal structure. By changing M, a pore diameter can be adjusted.

In selecting the drying agent, a pore diameter and a breaking strength are important. In the case of using a drying agent having a pore diameter larger than a molecular diameter of the working medium for heat cycle and the refrigerant oil contained in the composition for a heat cycle system, the working medium for heat cycle and the refrigerant oil are absorbed into the drying agent. As a result, a chemical reaction occurs between the working medium for heat cycle and the refrigerant oil and the drying agent, thereby causing unfavorable phenomena such as generation of

noncondensing gas, a decrease in strength of the drying agent, and a decrease in absorption capacity.

Accordingly, as the drying agent, it is preferred to use a zeolite-based drying agent having a small pore diameter. In particular, a sodium-potassium A type synthetic zeolite having a pore diameter of 3.5 angstrom or less is preferred. Applying the sodium-potassium A type synthetic zeolite having a pore diameter smaller than the molecular diameter of the working medium for heat cycle and the refrigerant oil makes it possible to selectively absorb and remove only moisture in the heat cycle system without absorbing the working medium for heat cycle and the refrigerant oil. In other words, since the absorption of the working medium for heat cycle and the refrigerant oil to the drying agent is unlikely occur, thermal decomposition becomes less likely to occur, thereby making it possible to suppress deterioration of the material forming the heat cycle system and occurrence of contaminants.

The size of the zeolite-based drying agent is preferably about 0.5 mm or more and 5 mm or less because the zeolite-based drying agent having a too-small size causes clogging of a valve or a pipe small portion in the heat cycle system, whereas the zeolite-based drying agent having a too-large size decreases the drying ability. The shape of the zeolite-based drying agent is preferably granular or cylindrical.

The zeolite-based drying agent can be made into an arbitrary shape by solidifying powdery zeolite with a binder (bentonite or the like). As long as the zeolite-based drying agent is used as a main body, another drying agent (silica gel, activated alumina, or the like) may be used together. The use ratio of the zeolite-based drying agent to the composition for a heat cycle system is not particularly limited.

Further, the noncondensing gas, when entering the inside of the heat cycle system, has adverse effects such as failure of thermal transfer in the condenser and the evaporator and an increase in working pressure, and therefore the mixture of the noncondensing gas needs to be suppressed as much as possible. In particular, oxygen being one noncondensing gas reacts with the working medium for heat cycle and the refrigerant oil to promote decomposition.

The concentration of the noncondensing gas is preferably 1.5 volume% or less and particularly preferably 0.5 volume% or less by volume percent with respect to the working medium for heat cycle in a gas phase part of the working medium for heat cycle.

According to the above-described heat cycle system of the present invention, use of the composition for a heat cycle system of the present invention makes it possible to achieve good lubricating properties and obtain practically sufficient cycle performance while suppressing an effect on global warming, and causes substantially no problems related to the temperature glide.

[Example]

Hereinafter, the present invention will be explained in further detail with reference to Examples (Examples 1 to 257), Conventional examples (Examples 258 to 265) and Comparative examples (Examples 266,267). In Examples, 50 g of the refrigerant oil was mixed and dissolved in 50 g of the working medium for heat cycle according to combinations illustrated in Tables 5 to 31 to produce compositions for a heat cycle system. Accordingly, the composition for a heat cycle system in each Example is one constituted of 50 mass% of the working medium for heat cycle and 50 mass% of the refrigerant oil.

Here, the following working mediums for heat cycle and refrigerant oils were used. Incidentally, compounds constituting the working mediums for heat cycle are illustrated in Table 2 to Table 4 in a summarized manner. Here, the working mediums for heat cycle 1 to 8 each are to use HCFO-1224yd alone, and the working mediums for heat cycle 9 to 56 each are to use HCFO-1224yd and another working medium in mixture. Further, the working mediums for heat cycle 57 and 58 are to use HFC-134a and HFC-245fa alone respectively as the conventional example.

The working mediums for heat cycle 1 to 8 each mix with HCFO-1224yd(E) and HCFO-1224yd(Z) as HCFO-1224yd at a predetermined ratio, and in Table 2, a proportion of each isomer is clearly illustrated. Further, the working mediums for heat cycle 9 to 56 each use as HCFO-1224yd a mixture of an E-isomer and a Z-isomer obtained by synthesis, and in Table 2 and Table 3, the isomers are just described as "HFO-1224yd" simply without distinction. Incidentally, the mixture of the E-isomer and the Z-isomer as HCFO-1224yd used here is one containing HCFO-1224yd(E) and HCFO-1224yd(Z) at a HCFO-1224yd(E): HCFO-1224yd(Z) ratio of 15: 85 (mass ratio).

[Table 2]

| | | | | | | [Mass%] |
|---|---|---|---|---|---|---|
| Working medium | HCFO-1224yd(Z) | HCFO-1224yd(E) | HCFO-1224yd | HFC-134a | HFC-245fa | HFC-365mfc |
| 1 | 100 | | | | | |
| 2 | 95 | 5 | | | | |
| 3 | 90 | 10 | | | | |

(continued)

| [Mass%] | | | | | | |
|---|---|---|---|---|---|---|
| Working medium | HCFO-1224yd(Z) | HCFO-1224yd(E) | HCFO-1224yd | HFC-134a | HFC-245fa | HFC-365mfc |
| 4 | 85 | 15 | | | | |
| 5 | 80 | 20 | | | | |
| 6 | 70 | 30 | | | | |
| 7 | 60 | 40 | | | | |
| 8 | 50 | 50 | | | | |
| 9 | | | 95 | 5 | | |
| 10 | | | 90 | 10 | | |
| 11 | | | 80 | 20 | | |
| 12 | | | 70 | 30 | | |
| 13 | | | 60 | 40 | | |
| 14 | | | 50 | 50 | | |
| 15 | | | 95 | | 5 | |
| 16 | | | 90 | | 10 | |
| 17 | | | 80 | | 20 | |
| 18 | | | 70 | | 30 | |
| 19 | | | 60 | | 40 | |
| 20 | | | 50 | | 50 | |
| 21 | | | 95 | | | 5 |
| 22 | | | 90 | | | 10 |
| 23 | | | 80 | | | 20 |
| 24 | | | 70 | | | 30 |
| 25 | | | 60 | | | 40 |
| 26 | | | 50 | | | 50 |

[Table 3]

| [Mass%] | | | | | | | |
|---|---|---|---|---|---|---|---|
| Working medium | HCFO-1224yd | HFO-1234yf | HFO-1234ze(E) | HFO-1234ze(Z) | HFO-1336mzz (Z) | HCFO-1233zd(E) | HCFO-1233zd(Z) |
| 27 | 90 | 10 | | | | | |
| 28 | 70 | 30 | | | | | |
| 29 | 50 | 50 | | | | | |
| 30 | 30 | 70 | | | | | |
| 31 | 10 | 90 | | | | | |
| 32 | 90 | | 10 | | | | |
| 33 | 70 | | 30 | | | | |
| 34 | 50 | | 50 | | | | |

(continued)

| [Mass%] | | | | | | | |
|---|---|---|---|---|---|---|---|
| Working medium | HCFO-1224yd | HFO-1234yf | HFO-1234ze(E) | HFO-1234ze(Z) | HFO-1336mzz (Z) | HCFO-1233zd(E) | HCFO-1233zd(Z) |
| 35 | 30 | | 70 | | | | |
| 36 | 10 | | 90 | | | | |
| 37 | 90 | | | 10 | | | |
| 38 | 70 | | | 30 | | | |
| 39 | 50 | | | 50 | | | |
| 40 | 30 | | | 70 | | | |
| 41 | 10 | | | 90 | | | |
| 42 | 90 | | | | | 10 | |
| 43 | 70 | | | | | 30 | |
| 44 | 50 | | | | | 50 | |
| 45 | 30 | | | | | 70 | |
| 46 | 10 | | | | | 90 | |
| 47 | 90 | | | | | | 10 |
| 48 | 70 | | | | | | 30 |
| 49 | 50 | | | | | | 50 |
| 50 | 30 | | | | | | 70 |
| 51 | 10 | | | | | | 90 |
| 52 | 90 | | | | 10 | | |
| 53 | 70 | | | | 30 | | |
| 54 | 50 | | | | 50 | | |
| 55 | 30 | | | | 70 | | |
| 56 | 10 | | | | 90 | | |

[Table 4]

| [Mass%] | | |
|---|---|---|
| Working medium | HFC-134a | HFC-245fa |
| 57 | 100 | |
| 58 | | 100 |

Refrigerant oil 1: refrigerant oil containing a polyol ester as its main component (product name: Ze-GLES RB-68, manufactured by JXTG Nippon Oil & Energy Corporation; kinematic viscosity at 40°C of 68 $mm^2/s$)
Refrigerant oil 2: refrigerant oil containing polyvinyl ether as its main component (product name: Daphne Hermetic Oil FVC68D, manufactured by Idemitsu Kosan Co., Ltd.; kinematic viscosity at 40°C of 68 $mm^2/s$)
Refrigerant oil 3: refrigerant oil containing a polyalkylene glycol as its main component (product name: ND-8, manufactured by DENSO Corporation; kinematic viscosity at 40°C of 41 $mm^2/s$)
Refrigerant oil 4: refrigerant oil containing alkyl benzene as its main component (product name: ATMOS N22,

manufactured by JXTG Nippon Oil & Energy Corporation; kinematic viscosity at 40°C of 21.5 $mm^2/s$)
Refrigerant oil 5: naphthenic higher refrigerant oil (product name: SUNISO 4GS, manufactured by Idemitsu Kosan Co.,Ltd.; kinematic viscosity at 40°C of 68 $mm^2/s$)

(Circulation state of refrigerant Oil)

Each of the compositions for a heat cycle system obtained in Examples was applied to such a heat cycle system as illustrated in FIG. 1, and continuous operation of the heat cycle system was performed. In order to evaluate the circulation state of the composition for a heat cycle system, part of a flow path from an evaporator to a compressor in the heat cycle system was formed by a glass pipe. Through the glass pipe, the inside was observed to evaluate the circulation state of the composition for a heat cycle system in the heat cycle system. The circulation state of the composition for a heat cycle system was visually evaluated based on the following standards.

A: Circulation of the refrigerant oil was confirmed.
B: Circulation of the refrigerant oil was confirmed, but the circulation amount was insufficient.
C: Circulation of the refrigerant oil was not confirmed.

Results are collectively illustrated in Tables 5 to 31. These results revealed that with all of the compositions for a heat cycle system in Examples 1 to 257, circulation of the refrigerant oil can be confirmed to be good, and results at the same level as the compositions for a heat cycle system containing HFC-134a or HFC-245fa described in Conventional technique examples 258 to 265 were obtained. In the meantime, in Examples 266, 267 in which the working medium for heat cycle of HFC-134a or HFC-245fa and the refrigerant oil 5 were used, no circulation of the refrigerant oil was confirmed by observation through the glass pipe, and desired performance as the composition for a heat cycle system was not obtained.

[Stability test]

A stability test was performed on the compositions for a heat cycle system in Examples 1 to 265 with a good circulation state in accordance with the "chemical stability test method of refrigerant and refrigerant oil (autoclave)" described in JIS K2211.

ach of the compositions for a heat cycle system obtained in Examples 1 to 265 was put in a 200 ml stainless steel pressure resistant container in which a 150 ml glass tube was put, as a catalyst, metal pieces of iron, copper, and aluminum were put in the pressure resistant container, and the pressure resistant container was closed. Then, the closed pressure resistant container was stored in a thermostatic oven (perfect oven PHH-202, manufactured by ESPEC CORP.) at 175°C for 14 days, and an acid content measurement of the working medium for heat cycle, a hue observation of the refrigerant oil, and an observation of outer appearance change of the catalyst were performed as follows.

Incidentally, as the metal pieces to be the catalyst, a) to c) below were used.

a) Iron: a test piece of general cold-rolled steel sheet (one defined in JIS G3141, type of number SPCC-SB), 30 mm $\times$ 25 mm $\times$ 3.2 mm in thickness
b) Copper: a test piece of tough pitch copper (one defined in JIS H3100, alloy number C1100, number C100P), 30 mm $\times$ 25 mm $\times$ 2 mm in thickness
c) Aluminum: a test piece of pure aluminum (one defined in JIS H4000, alloy number 1050, number A1050P), 30 mm $\times$ 25 mm $\times$ 2 mm in thickness

(Acid content measurement)

The acid content measurement of the working medium for heat cycle after the stability test was performed in accordance with JIS K1560 (1,1,1,2-tetrafluoroethane (HFC-134a)).

The pressure resistant container after the stability test was left at rest until its temperature became room temperature. Further, 100 ml of pure water was put into each of 4 absorption bulbs, and one in which the absorption bulbs were connected in series by a capillary tube was prepared. Subsequently, the absorption bulbs in which pure water was put connected to one another were connected to the pressure resistant container at room temperature, and a valve of the pressure resistant container was gradually opened to introduce the working medium for heat cycle into the water in the absorption bulbs, and the acid content contained in the working medium for heat cycle was extracted.

The resultant after the water in the first absorption bulb and the water in the second absorption bulb after the extraction were put together to have one drop of an indicator (BTB: bromothymol blue) added thereto was subjected to titration using a 1/100N-NaOH alkali standard solution. At the same time, the resultant after the water in the third

absorption bulb and the water in the fourth absorption bulb were put together was subjected to titration similarly, to be set as a blank measurement. From a measured value and a value of the blank measurement, the acid content contained in the working medium for heat cycle after the test was obtained as HCl concentration.

(Hue of refrigerant oil)

After the measurement of the acid content, the refrigerant oil remaining in the pressure resistant container from which the working medium for heat cycle had been extracted was taken out, and the hue of the refrigerant oil was evaluated in accordance with ASTM-D156. Here, the larger a value L, the higher the degree of coloring, and thus, the lower the value L, the more preferred. Here, L is preferably 3.5 or less, more preferably 3.0 or less, and further preferably 2.5 or less.

(Outer appearance change of catalyst)

The outer appearance of the catalyst metal piece after the above-described stability test was visually confirmed, and the outer appearance change of the catalyst was evaluated based on the following standards.

A: No change was confirmed.
B: Gloss of the catalyst disappeared or the catalyst blackened.

The case where the gloss of the catalyst disappeared or the catalyst blackened indicates that the composition for a heat cycle system deteriorated by the above-described stability test.

[Table 5]

| Example number | | 1 | 2 | 3 | 4 | 5 | 6 | 7 | 8 | 9 | 10 |
|---|---|---|---|---|---|---|---|---|---|---|---|
| Working medium | | 1 | 1 | 1 | 1 | 1 | 2 | 2 | 2 | 2 | 2 |
| Refrigerant oil | | 1 | 2 | 3 | 4 | 5 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L3.5 | L2 | L3 | L3 | L2 | L3 | L2 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 6]

| Example number | | 11 | 12 | 13 | 14 | 15 | 16 | 17 | 18 | 19 | 20 |
|---|---|---|---|---|---|---|---|---|---|---|---|
| Working medium | | 3 | 3 | 3 | 3 | 3 | 4 | 4 | 4 | 4 | 4 |
| Refrigerant oil | | 1 | 2 | 3 | 4 | 5 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L3 | L2 | L2 | L3 | L2 | L2 | L2 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 7]

| Example number | | 21 | 22 | 23 | 24 | 25 | 26 | 27 | 28 | 29 | 30 |
|---|---|---|---|---|---|---|---|---|---|---|---|
| Working medium | | 5 | 5 | 5 | 5 | 5 | 6 | 6 | 6 | 6 | 6 |
| Refrigerant oil | | 1 | 2 | 3 | 4 | 5 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L3 | L2.5 | L3 | L3 | L2 | L2.5 | L3 | L2 | L2.5 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 8]

| Example number | | 31 | 32 | 33 | 34 | 35 | 36 | 37 | 38 | 39 | 40 |
|---|---|---|---|---|---|---|---|---|---|---|---|
| Working medium | | 7 | 7 | 7 | 7 | 7 | 8 | 8 | 8 | 8 | 8 |
| Refrigerant oil | | 1 | 2 | 3 | 4 | 5 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L2 | L2 | L2 | L2 | L3 | L3 | L2.5 | L2.5 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 9]

| Example number | | 41 | 42 | 43 | 44 | 45 | 46 | 47 | 48 | 49 | 50 |
|---|---|---|---|---|---|---|---|---|---|---|---|
| Working medium | | 9 | 9 | 9 | 9 | 9 | 10 | 10 | 10 | 10 | 10 |
| Refrigerant oil | | 1 | 2 | 3 | 4 | 5 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L2 | L2.5 | L3 | L2 | L3 | L3 | L2.5 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 10]

| Example number | 51 | 52 | 53 | 54 | 55 | 56 | 57 | 58 | 59 | 60 |
|---|---|---|---|---|---|---|---|---|---|---|
| Working medium | 11 | 11 | 11 | 11 | 11 | 12 | 12 | 12 | 12 | 12 |
| Refrigerant oil | 1 | 2 | 3 | 4 | 5 | 1 | 2 | 3 | 4 | 5 |
| Circulation state | A | A | A | A | A | A | A | A | A | A |
| Acid content [ppm] | <1 | <1 | <1 | <1 | <1 | <1 | <1 | <1 | <1 | <1 |

(continued)

| Example number | | 51 | 52 | 53 | 54 | 55 | 56 | 57 | 58 | 59 | 60 |
|---|---|---|---|---|---|---|---|---|---|---|---|
| Hue | | L3 | L2 | L2 | L2 | L2 | L2.5 | L3 | L2.5 | L3 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 11]

| Example number | | 61 | 62 | 63 | 64 | 65 | 66 | 67 | 68 | 69 | 70 |
|---|---|---|---|---|---|---|---|---|---|---|---|
| Working medium | | 13 | 13 | 13 | 13 | 14 | 14 | 14 | 14 | 15 | 15 |
| Refrigerant oil | | 1 | 2 | 3 | 4 | 1 | 2 | 3 | 4 | 1 | 2 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L2.5 | L3 | L2 | L2 | L2.5 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 12]

| Example number | | 71 | 72 | 73 | 74 | 75 | 76 | 77 | 78 | 79 | 80 |
|---|---|---|---|---|---|---|---|---|---|---|---|
| Working medium | | 15 | 15 | 15 | 16 | 16 | 16 | 16 | 16 | 17 | 17 |
| Refrigerant oil | | 3 | 4 | 5 | 1 | 2 | 3 | 4 | 5 | 1 | 2 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L2 | L2.5 | L3 | L2 | L2 | L2.5 | L3 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 13]

| Example number | | 81 | 82 | 83 | 84 | 85 | 86 | 87 | 88 | 89 | 90 |
|---|---|---|---|---|---|---|---|---|---|---|---|
| Working medium | | 17 | 17 | 17 | 18 | 18 | 18 | 18 | 18 | 19 | 19 |
| Refrigerant oil | | 3 | 4 | 5 | 1 | 2 | 3 | 4 | 5 | 1 | 2 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2.5 | L3 | L2 | L2 | L2.5 | L3 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 14]

| Example number | | 91 | 92 | 93 | 94 | 95 | 96 | 97 | 98 | 99 | 100 |
|---|---|---|---|---|---|---|---|---|---|---|---|
| Working medium | | 19 | 19 | 20 | 20 | 20 | 20 | 21 | 21 | 21 | 21 |
| Refrigerant oil | | 3 | 4 | 1 | 2 | 3 | 4 | 1 | 2 | 3 | 4 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L2.5 | L3 | L2 | L2 | L2.5 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 15]

| Example number | | 101 | 102 | 103 | 104 | 105 | 106 | 107 | 108 | 109 | 110 |
|---|---|---|---|---|---|---|---|---|---|---|---|
| Working medium | | 21 | 22 | 22 | 22 | 22 | 22 | 23 | 23 | 23 | 23 |
| Refrigerant oil | | 5 | 1 | 2 | 3 | 4 | 5 | 1 | 2 | 3 | 4 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L2.5 | L3 | L2 | L2 | L2 | L2.5 | L3 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 16]

| Example number | | 111 | 112 | 113 | 114 | 115 | 116 | 117 | 118 | 119 | 120 |
|---|---|---|---|---|---|---|---|---|---|---|---|
| Working medium | | 23 | 24 | 24 | 24 | 24 | 24 | 25 | 25 | 25 | 25 |
| Refrigerant oil | | 5 | 1 | 2 | 3 | 4 | 5 | 1 | 2 | 3 | 4 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L3 | L2.5 | L2.5 | L3 | L3 | L2.5 | L2.5 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 17]

| Example number | 121 | 122 | 123 | 124 | 125 | 126 | 127 | 128 | 129 | 130 |
|---|---|---|---|---|---|---|---|---|---|---|
| Working medium | 26 | 26 | 26 | 26 | 27 | 27 | 27 | 27 | 27 | 28 |
| Refrigerant oil | 1 | 2 | 3 | 4 | 1 | 2 | 3 | 4 | 5 | 1 |
| Circulation state | A | A | A | A | A | A | A | A | A | A |

(continued)

| Example number | | 121 | 122 | 123 | 124 | 125 | 126 | 127 | 128 | 129 | 130 |
|---|---|---|---|---|---|---|---|---|---|---|---|
| Acid content [ppm] | | <1 | <1 | <1 | <1 | <1 | <1 | <1 | <1 | <1 | <1 |
| Hue | | L2.5 | L2.5 | L3 | L3 | L2.5 | L2.5 | L3 | L3 | L2.5 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 18]

| Example number | | 131 | 132 | 133 | 134 | 135 | 136 | 137 | 138 | 139 | 140 |
|---|---|---|---|---|---|---|---|---|---|---|---|
| Working medium | | 28 | 28 | 28 | 28 | 29 | 29 | 29 | 29 | 29 | 30 |
| Refrigerant oil | | 2 | 3 | 4 | 5 | 1 | 2 | 3 | 4 | 5 | 1 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L3 | L3 | L3 | L2.5 | L2.5 | L2.5 | L2.5 | L3 | L3 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 19]

| Example number | | 141 | 142 | 143 | 144 | 145 | 146 | 147 | 148 | 149 | 150 |
|---|---|---|---|---|---|---|---|---|---|---|---|
| Working medium | | 30 | 30 | 30 | 31 | 31 | 31 | 31 | 32 | 32 | 32 |
| Refrigerant oil | | 2 | 3 | 4 | 1 | 2 | 3 | 4 | 1 | 2 | 3 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L3 | L2.5 | L2.5 | L3 | L3 | L2.5 | L2.5 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 20]

| Example number | 151 | 152 | 153 | 154 | 155 | 156 | 157 | 158 | 159 | 160 |
|---|---|---|---|---|---|---|---|---|---|---|
| Working medium | 32 | 32 | 33 | 33 | 33 | 33 | 33 | 34 | 34 | 34 |
| Refrigerant oil | 4 | 5 | 1 | 2 | 3 | 4 | 5 | 1 | 2 | 3 |
| Circulation state | A | A | A | A | A | A | A | A | A | A |
| Acid content [ppm] | <1 | <1 | <1 | <1 | <1 | <1 | <1 | <1 | <1 | <1 |
| Hue | L2.5 | L2.5 | L3 | L3 | L2.5 | L2.5 | L3 | L3 | L2.5 | L2.5 |

(continued)

| Example number | | 151 | 152 | 153 | 154 | 155 | 156 | 157 | 158 | 159 | 160 |
|---|---|---|---|---|---|---|---|---|---|---|---|
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 21]

| Example number | | 161 | 162 | 163 | 164 | 165 | 166 | 167 | 168 | 169 | 170 |
|---|---|---|---|---|---|---|---|---|---|---|---|
| Working medium | | 34 | 35 | 35 | 35 | 35 | 36 | 36 | 36 | 36 | 37 |
| Refrigerant oil | | 4 | 1 | 2 | 3 | 4 | 1 | 2 | 3 | 4 | 1 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L3 | L3 | L2.5 | L2.5 | L3 | L2.5 | L2.5 | L3 | L3 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 22]

| Example number | | 171 | 172 | 173 | 174 | 175 | 176 | 177 | 178 | 179 | 180 |
|---|---|---|---|---|---|---|---|---|---|---|---|
| Working medium | | 37 | 37 | 37 | 37 | 38 | 38 | 38 | 38 | 38 | 39 |
| Refrigerant oil | | 2 | 3 | 4 | 5 | 1 | 2 | 3 | 4 | 5 | 1 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L3 | L2.5 | L2.5 | L3 | L3 | L2.5 | L2.5 | L3 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 23]

| Example number | | 181 | 182 | 183 | 184 | 185 | 186 | 187 | 188 | 189 | 190 |
|---|---|---|---|---|---|---|---|---|---|---|---|
| Working medium | | 39 | 39 | 39 | 40 | 40 | 40 | 40 | 41 | 41 | 41 |
| Refrigerant oil | | 2 | 3 | 4 | 1 | 2 | 3 | 4 | 1 | 2 | 3 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L2.5 | L3 | L3 | L2.5 | L2.5 | L3 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 24]

| Example number | | 191 | 192 | 193 | 194 | 195 | 196 | 197 | 198 | 199 | 200 |
|---|---|---|---|---|---|---|---|---|---|---|---|
| Working medium | | 41 | 42 | 42 | 42 | 42 | 42 | 43 | 43 | 43 | 43 |
| Refrigerant oil | | 4 | 1 | 2 | 3 | 4 | 5 | 1 | 2 | 3 | 4 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2.5 | L3 | L2.5 | L3 | L3 | L2 | L2 | L2.5 | L3 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 25]

| Example number | | 201 | 202 | 203 | 204 | 205 | 206 | 207 | 208 | 209 | 210 |
|---|---|---|---|---|---|---|---|---|---|---|---|
| Working medium | | 43 | 44 | 44 | 44 | 44 | 45 | 45 | 45 | 45 | 46 |
| Refrigerant oil | | 5 | 1 | 2 | 3 | 4 | 1 | 2 | 3 | 4 | 1 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2.5 | L3 | L2 | L2 | L2.5 | L3 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 26]

| Example number | | 211 | 212 | 213 | 214 | 215 | 216 | 217 | 218 | 219 | 220 |
|---|---|---|---|---|---|---|---|---|---|---|---|
| Working medium | | 46 | 46 | 46 | 47 | 47 | 47 | 47 | 47 | 48 | 48 |
| Refrigerant oil | | 2 | 3 | 4 | 1 | 2 | 3 | 4 | 5 | 1 | 2 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L2.5 | L3 | L2 | L2 | L2.5 | L3 | L2 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 27]

| Example number | 221 | 222 | 223 | 224 | 225 | 226 | 227 | 228 | 229 | 230 |
|---|---|---|---|---|---|---|---|---|---|---|
| Working medium | 48 | 48 | 48 | 49 | 49 | 49 | 49 | 50 | 50 | 50 |
| Refrigerant oil | 3 | 4 | 5 | 1 | 2 | 3 | 4 | 1 | 2 | 3 |
| Circulation state | A | A | A | A | A | A | A | A | A | A |

(continued)

| Example number | | 221 | 222 | 223 | 224 | 225 | 226 | 227 | 228 | 229 | 230 |
|---|---|---|---|---|---|---|---|---|---|---|---|
| Acid content [ppm] | | <1 | <1 | <1 | <1 | <1 | <1 | <1 | <1 | <1 | <1 |
| Hue | | L2.5 | L3 | L2 | L2 | L2.5 | L2 | L2 | L2.5 | L3 | L2 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 28]

| Example number | | 231 | 232 | 233 | 234 | 235 | 236 | 237 | 238 | 239 | 240 |
|---|---|---|---|---|---|---|---|---|---|---|---|
| Working medium | | 50 | 51 | 51 | 51 | 51 | 52 | 52 | 52 | 52 | 52 |
| Refrigerant oil | | 4 | 1 | 2 | 3 | 4 | 1 | 2 | 3 | 4 | 5 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2.5 | L3 | L2 | L2 | L2.5 | L3 | L2 | L2 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 29]

| Example number | | 241 | 242 | 243 | 244 | 245 | 246 | 247 | 248 | 249 | 250 |
|---|---|---|---|---|---|---|---|---|---|---|---|
| Working medium | | 53 | 53 | 53 | 53 | 53 | 54 | 54 | 54 | 54 | 55 |
| Refrigerant oil | | 1 | 2 | 3 | 4 | 5 | 1 | 2 | 3 | 4 | 1 |
| Circulation state | | A | A | A | A | A | A | A | A | A | A |
| Acid content [ppm] | | <1 | <1 | <1 | <1 | <1 | <1 | <1 | <1 | <1 | <1 |
| Hue | | L2 | L2 | L2.5 | L3 | L2 | L2 | L2.5 | L3 | L2.5 | L2.5 |
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 30]

| Example number | 251 | 252 | 253 | 254 | 255 | 256 | 257 | 258 | 259 | 260 |
|---|---|---|---|---|---|---|---|---|---|---|
| Working medium | 55 | 55 | 55 | 56 | 56 | 56 | 56 | 57 | 57 | 57 |
| Refrigerant oil | 2 | 3 | 4 | 1 | 2 | 3 | 4 | 1 | 2 | 3 |
| Circulation state | A | A | A | A | A | A | A | A | A | A |
| Acid content [ppm] | <1 | <1 | <1 | <1 | <1 | <1 | <1 | <1 | <1 | <1 |
| Hue | L3 | L3 | L2 | L2.5 | L3 | L2.5 | L2.5 | L3 | L3 | L2.5 |

(continued)

| Example number | | 251 | 252 | 253 | 254 | 255 | 256 | 257 | 258 | 259 | 260 |
|---|---|---|---|---|---|---|---|---|---|---|---|
| Catalyst | Fe | A | A | A | A | A | A | A | A | A | A |
| | Cu | A | A | A | A | A | A | A | A | A | A |
| | Al | A | A | A | A | A | A | A | A | A | A |

[Table 31]

| Example number | | 261 | 262 | 263 | 264 | 265 | 266 | 267 |
|---|---|---|---|---|---|---|---|---|
| Working medium | | 57 | 58 | 58 | 58 | 58 | 57 | 58 |
| Refrigerant oil | | 4 | 1 | 2 | 3 | 4 | 5 | 5 |
| Circulation state | | A | A | A | A | A | C | C |
| Acid content [ppm] | | <1 | <1 | <1 | <1 | <1 | - | - |
| Hue | | L2.5 | L3 | L3 | L2.5 | L2.5 | - | - |
| Catalyst | Fe | A | A | A | A | A | - | - |
| | Cu | A | A | A | A | A | - | - |
| | Al | A | A | A | A | A | - | - |

The above results revealed that all the compositions for a heat cycle system in Examples 1 to 257 being Examples of the present invention have the same properties as those of Examples 258 to 265 each using the composition for a heat cycle system of the conventional technique and are suitable for the composition for a heat cycle system.

INDUSTRIAL APPLICABILITY

The composition for a heat cycle system and the heat cycle system using the composition of the present invention can be utilized for refrigerating apparatuses (such as a built-in showcase, a separate showcase, an industrial fridge-freezer, a vending machine, and an ice making machine), air-conditioning apparatuses (such as a room air-conditioner, a store packaged air-conditioner, a building packaged air-conditioner, a plant packaged air-conditioner, a heat source equipment chilling unit, a gas engine heat pump, a train air-conditioning system, and an automobile air-conditioning system), a power generation system (such as exhaust heat recovery power generation), a heat transport apparatus (such as a heat pipe), and a secondary cooling machine.

EXPLANATION OF REFERENCE NUMERALS

10...refrigeration cycle system, 11...compressor, 12...condenser, 13...expansion valve, 14...evaporator, 15, 16...pump

**Claims**

1. A composition for a heat cycle system comprising:

   a working medium for heat cycle containing 1-chloro-2,3,3,3-tetrafluoropropene; and
   a refrigerant oil.

2. The composition for a heat cycle system according to claim 1,
   wherein the 1-chloro-2,3,3,3-tetrafluoropropene contains (Z)-1-chloro-2,3,3,3-tetrafluoropropene and (E)-1-chloro-2,3,3,3-tetrafluoropropene at a ratio of 51: 49 to 100: 0 by mass ratio represented by (Z)-1-chloro-2,3,3,3-tetrafluoropropene: (E)-1-chloro-2,3,3,3-tetrafluoropropene.

3. The composition for a heat cycle system according to claim 1 or 2,

wherein the refrigerant oil contains at least one type of oil selected from the group consisting of an ester-based refrigerant oil, an ether-based refrigerant oil, a hydrocarbon-based refrigerant oil, and a naphthenic refrigerant oil.

**4.** The composition for a heat cycle system according to claim 3,
wherein the refrigerant oil contains at least one type of compound selected from the group consisting of a dibasic acid ester, a polyol ester, a complex ester, a polyol carbonic acid ester, polyvinyl ether, a polyalkylene glycol, alkyl benzene, and a naphthene-base oil.

**5.** The composition for a heat cycle system according to any one of claims 1 to 4,
wherein the refrigerant oil has a kinematic viscosity at 40°C of 1 $mm^2/s$ or more and 750 $mm^2/s$ or less.

**6.** The composition for a heat cycle system according to any one of claims 1 to 5,
wherein the refrigerant oil contains carbon atoms and oxygen atoms at a ratio of 2.0 or more and 7.5 or less by molar ratio represented by carbon atoms/oxygen atoms.

**7.** The composition for a heat cycle system according to any one of claims 1 to 6,
wherein the working medium for heat cycle further contains saturated hydrofluorocarbon.

**8.** The composition for a heat cycle system according to any one of claims 1 to 7,
wherein the working medium for heat cycle further contains hydrofluoroolefin.

**9.** The composition for a heat cycle system according to any one of claims 1 to 8,
wherein the working medium for heat cycle further contains hydrochlorofluoroolefin other than the 1-chloro-2,3,3,3-tetrafluoropropene.

**10.** The composition for a heat cycle system according to any one of claims 1 to 9,
wherein the working medium for heat cycle contains 10 mass% or more and 100 mass% or less of the 1-chloro-2,3,3,3-tetrafluoropropene.

**11.** The composition for a heat cycle system according to claim 10,
wherein the working medium for heat cycle contains 20 mass% or more and 95 mass% or less of the 1-chloro-2,3,3,3-tetrafluoropropene.

**12.** A heat cycle system using the composition for a heat cycle system according to any one of claims 1 to 11.

**13.** The heat cycle system according to claim 12,
wherein the heat cycle system is a refrigerating apparatus, an air-conditioning apparatus, a power generation system, a heat transport apparatus, or a secondary cooling machine.

**14.** The heat cycle system according to claim 12,
wherein the heat cycle system is a centrifugal refrigerator.

**15.** The heat cycle system according to claim 12,
wherein the heat cycle system is a low-pressure centrifugal refrigerator.

FIG. 1

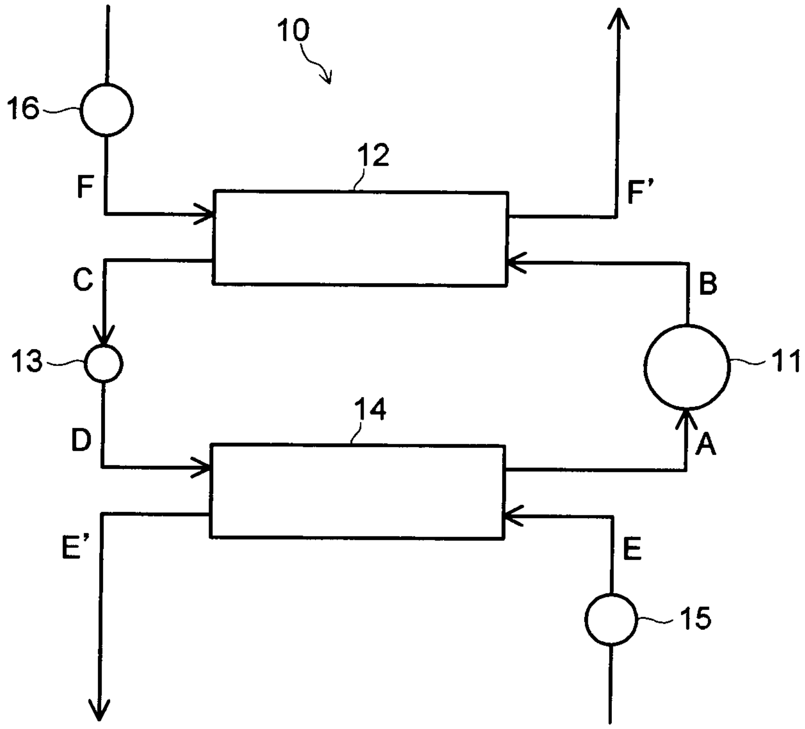

FIG. 2

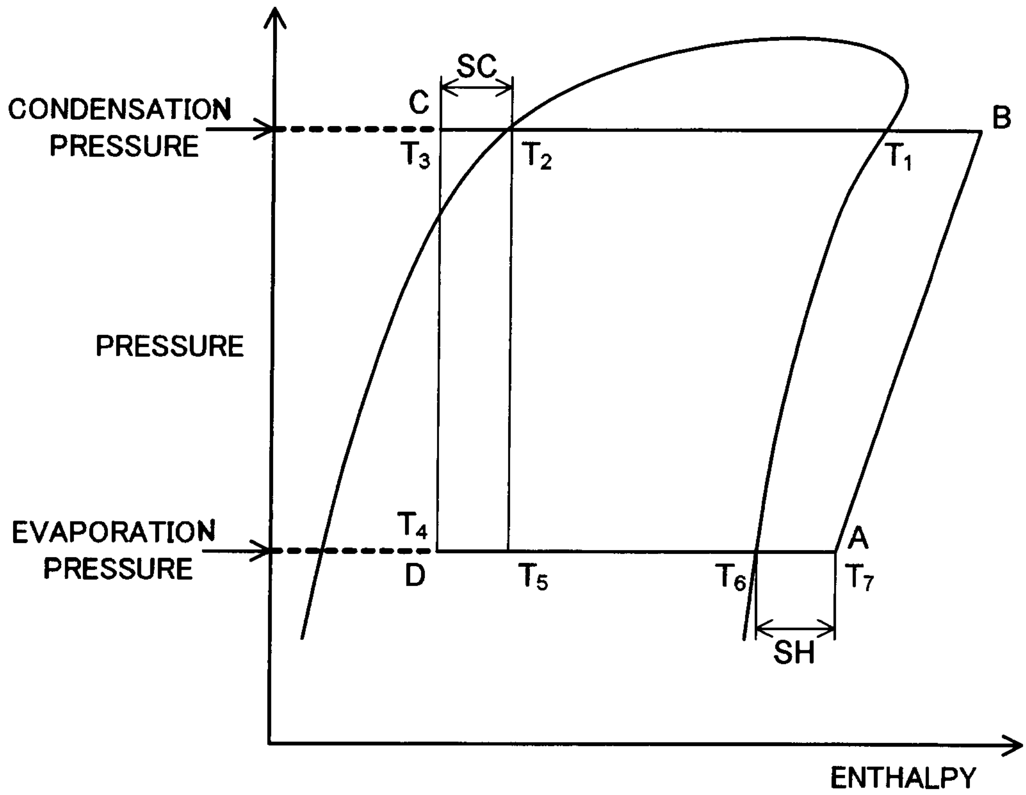
SC
C
CONDENSATION PRESSURE
T3
T2
B
T1
PRESSURE
EVAPORATION PRESSURE
T4
A
D
T5
T6
T7
SH
ENTHALPY

## INTERNATIONAL SEARCH REPORT

International application No.
PCT/JP2016/062803

A. CLASSIFICATION OF SUBJECT MATTER
*C09K5/04*(2006.01)i, *C10M105/36*(2006.01)i, *C10M105/38*(2006.01)i, *C10M105/42*(2006.01)i, *C10M105/48*(2006.01)i, *C10M107/24*(2006.01)i, *C10M107/34*(2006.01)i, *F25B1/00*(2006.01)i, *F25B1/053*(2006.01)i, *C10N20/02*(2006.01)n,

According to International Patent Classification (IPC) or to both national classification and IPC

B. FIELDS SEARCHED

Minimum documentation searched (classification system followed by classification symbols)
C09K5/04, C10M105/36, C10M105/38, C10M105/42, C10M105/48, C10M107/24, C10M107/34, F25B1/00, F25B1/053, C10N20/02, C10N30/06, C10N40/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN), Japio-GPG/FX

C. DOCUMENTS CONSIDERED TO BE RELEVANT

| Category* | Citation of document, with indication, where appropriate, of the relevant passages | Relevant to claim No. |
|---|---|---|
| X | WO 2012/157763 A1 (Asahi Glass Co., Ltd.), 22 November 2012 (22.11.2012), claims; paragraphs [0012], [0021] to [0033]; examples; fig. 1 & US 2014/0077122 A1 claims; paragraphs [0025], [0044] to [0067]; examples; fig. 1 & JP 5825345 B2 & EP 2711406 A1 | 1-15 |
| X | WO 2012/157764 A1 (Asahi Glass Co., Ltd.), 22 November 2012 (22.11.2012), claims; paragraphs [0013], [0023] to [0036]; examples; fig. 1 & US 2014/0070132 A1 claims; paragraphs [0043], [0048] to [0072]; examples; fig. 1 & EP 2711405 A1 | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 May 2016 (24.05.16) | 07 June 2016 (07.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/062803

C (Continuation). DOCUMENTS CONSIDERED TO BE RELEVANT

| Category* | Citation of document, with indication, where appropriate, of the relevant passages | Relevant to claim No. |
|---|---|---|
| X | WO 2012/157765 A1 (Asahi Glass Co., Ltd.), 22 November 2012 (22.11.2012), claims; paragraphs [0021], [0026] to [0039]; examples; fig. 1 & US 2014/0077123 A1 claims; paragraphs [0044], [0051] to [0075]; examples; fig. 1 & EP 2711407 A1 | 1-15 |
| X | WO 2014/080868 A1 (Asahi Glass Co., Ltd.), 30 May 2014 (30.05.2014), claims; paragraphs [0025] to [0037]; examples; fig. 1 (Family: none) | 1-15 |
| A | JP 2013-249326 A (Central Glass Co., Ltd.), 12 December 2013 (12.12.2013), entire text (Family: none) | 1-15 |
| A | JP 2010-531927 A (Arkema Inc.), 30 September 2010 (30.09.2010), entire text & US 2011/0012052 A1 entire text & WO 2009/151669 A1 | 1-15 |
| A | JP 2013-518171 A (Arkema Inc.), 20 May 2013 (20.05.2013), entire text & US 2012/0292556 A1 entire text & WO 2011/091404 A1 & EP 2529164 A1 | 1-15 |

Form PCT/ISA/210 (continuation of second sheet) (January 2015)

**INTERNATIONAL SEARCH REPORT**

International application No. PCT/JP2016/062803

Continuation of A. CLASSIFICATION OF SUBJECT MATTER (International Patent Classification (IPC))

*C10N30/06*(2006.01)n, *C10N40/30*(2006.01)n

(According to International Patent Classification (IPC) or to both national classification and IPC)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012157763 A1
- JP 2803451 B
- US 4249412 A
- JP H10502737 W
- JP 2007511645 W
- JP 2008500437 W
- JP 2008531836 W